# EUROPEAN PATENT SPECIFICATION

(11) **EP 2 746 356 B1**
(45) Date of publication and mention of the grant of the patent: **14.03.2018**
(21) Application number: 12197971.0
(22) Date of filing: 19.12.2012
(51) Int. Cl.: E06B 7/23, C09J 7/02

(54) **Adhesive tape roll, its method of manufacture and its use for making weatherseal strips**
Haftklebebandrolle, Herstellungsverfahren dafür und Verwendung davon zur Herstellung von wasserdichten Streifen
Rouleau de bande adhésive, son procédé de fabrication et son utilisation pour la fabrication de bandes d'étanchéité

(43) Date of publication of application: 25.06.2014
(73) Proprietor: 3M Innovative Properties Company, St. Paul, MN 55133-3427 (US)
(72) Inventor: Paschmann, Volker, 41453 Neuss (DE); Eckhardt, Doreen, 41453 Neuss (DE); Georg, David, 41453 Neuss (DE)
(74) Representative: Gabriel, Kiroubagaranne

(56) References cited:
- EP-A1- 2 186 867
- EP-A1- 2 426 181
- WO-A1-95/13184

## Description

The invention relates to a roll of acrylic foam tape, comprising an acrylic foam that is thermally crosslinked. In another aspect the invention relates to a method of making a roll of adhesive tape, wherein an adhesive tape with opposite first and second major sides is wound around a cylindrical or elliptical core by feeding the tape to the core.

Another aspect of the invention relates to a method of making an elongate rubber seal, especially for attachment to a door or a door frame in particular of a vehicle such as a motor vehicle.

Adhesives and tapes are commonly used to bond two substrates together to form a bonded composite. Particular adhesive tapes include those that have a foam layer. Such tapes or adhesive articles are used for example in the automotive industry where they may be employed to bond various components to the body of a car or other motor vehicle. Typically they are used to bond such parts as emblems, plastic parts as well as rubber gaskets to doors. Examples of adhesive tapes are disclosed in for example WO 2008/070386, US 6,503,621 and US 4,415,615.

While a vast array of adhesives and tapes are available, advances in substrates and end use requirements continues to drive a need for new adhesive formulations and tape constructions. For example, developments in paints and coatings on automotive parts to which the adhesive tapes are to be bonded have proven to be particularly challenging.

Likewise, there is a continuing trend in the transportation sector and in particular in the automotive industry to further reduce weight of for example cars in order to save on fuel consumption. This trend is leading to use and application of adhesive tapes where they have previously not been used or to the application of tapes in new configurations that are more demanding for example in stress-strain to which the adhesive tape may be subjected. As a particular example, rubber seals and gaskets are often applied around the frame of a door in the body of a vehicle by mechanical means such as clips, which add weight to the car. Replacing the mechanical attachment with an adhesive solution has been proven difficult. In addition to performance properties, environmental regulations and processing costs also 25 influence product formulation requirements.

Further, the assembly of vehicles such as cars and buses is highly automated and often involves the use of robots. Accordingly, application methods as disclosed in EP 1 902 813 have been proposed for the application of elongate strips on doors or door frames of vehicles. The device and method disclosed in this application have been found to produce excellent results when applying a rubber gasket using an adhesive tape around a door as the stress introduced in the adhesive tape is mitigated by measuring and controlling the stress on application. In particular, the method avoids introducing strain in the adhesive tape in a direction perpendicular to the plane of attachment of the tape.

On the other hand, it has been found that the application when used to apply a seal on the frame of a door on the body of the vehicle may still lead to detachment of the adhesive tape after some time. In particular, it was found that in areas of strong curvature of the door frame, for example at the corners of the door frame, detachment takes place because of the strain introduced in the adhesive tape within the plane parallel with the surface to which the tape is attached.

A further problem can arise from inhomogeneities introduced in the rubber article when bonded to the adhesive tape during the application of the adhesive tape to the rubber article. Varying stress introduced in the comparatively elastic adhesive tape during the application to the rubber article can lead to the formation of zones with differing adhesive bonding strength between the adhesive tape and the rubber article as well as to the formation of zones with longitudinal compression or stretching along the tape axis. Both phenomena can lead to premature failure of the adhesive bond between the rubber article and the surface it is adhered to via the adhesive tape.

It would thus be desirable to find an adhesive tape and a method leading to a reliable and resilient application of such an adhesive tape to the frame of the door on the body of the vehicle and in particular a method that solves the problem of detachment in areas of strong curvature.

A further problem in the manufacture of foam tapes that are useful in any of the above applications is the form of tape supply. While the tapes often have a comparatively small width, they nevertheless must be supplied in the form of rolls of sufficient length and stability, in order to allow for a quick and economic attachment. The supply of adhesive foam tape rolls according to the prior art has often happened in the form of radially wound rolls. Such rolls do, however, suffer from lack of stability and resistance to external forces, as they tend to disintegrate in the winding plane. In order to alleviate this problem, the roll would have to be wound with such a high force that the tape might exhibit stress/strain damage, might rupture or be stretched and thus lose its elasticity or dimensional integrity.

US 3,836,090 describes a "long yardage tape core and tape assembly", wherein the problem of supplying large lengths of tape is solved by a complicated plurality of axially aligned tape cores, which have transitional zones where an innermost convolution of one tape core joins the outermost convolution of a next tape core.

Also the attempt to manufacture level wound tape rolls has often resulted in the problem that the tape edges of neighboring convolutions have stuck together due to the adhesive nature of one of the tape layers, thus leading to problems when unwinding the tape or to partial or total tape rupture. The attempt to alleviate this problem by increasing the distance between the tape edges has, however resulted in a significantly decreased tape length one the roll, while the attempt to avoid adhering tape edges by lowering the winding strain has resulted in instable rolls with handling and unwinding instability.

US 2,746,696 describes the level winding of "tear strip" tapes comprising reinforcing filaments, the tape having a high lengthwise tensile strength and a thickness of about 0.3 mm.

Unfortunately so far no simple and reliable method has been described how to test whether a roll of tape will fulfill advanced requirements with regard to handling and unwinding stability on one hand, but will also be wound with a straining force low enough to minimize the risk of the tape suffering from one or more of the above mentioned detrimental influences. Often a failure in the above mentioned requirements was only discovered while the roll was in actual use, thus leading to costly interruptions in the production process.

Additionally, the production of wound tape rolls having a cross-linked acrylic foam layer may introduce stress and other artifacts that later may lead to adhesive bond failures in the final application, particularly where those applications become more and more demanding. In particular where the tape combines an acrylic foam layer with a heat activatable layer for bonding to a rubber seal, care must be taken in the production of wound tape rolls to avoid problems in the lamination process of the tape to a rubber gasket.

It would now be desirable to alleviate one or more problems with the acrylic foam tapes of the art and in particular to find acrylic foam tapes that provided in a roll form, can be readily used in producing rubber seals in a heat lamination process with excellent performance therein. It would likewise be desirable to find a method of producing such acrylic foam tapes that show excellent performance in the heat lamination process and/or that provide excellent bonding behavior in an application where the tape is bonded to for example a door or door frame. It would be in particular desirable to find a roll of acrylic foam tape that minimizes the risk of introducing undesired strain in the acrylic foam and/or that can be produced in a way that minimizing the introduction of strain in the acrylic foam.

It has further been a desire to provide a level wound roll of adhesive tape, especially a roll of acrylic foam tape comprising an acrylic foam, which can be used in the manufacture of adhesive elongate rubber seals, especially weatherseal components, which can, e.g., be used in the manufacture of doors or windows of vehicles for outdoor use such as cars, trains, trucks and the like.

A further desire was the provision of a layered acrylic adhesive foam tape which can be used for the manufacture of level wound tape rolls, such as the tape rolls described according to the invention. It was especially desirable to provide a layered acrylic adhesive foam tape that can be level wound to form a stable roll of tape an improved resistance towards mechanical impact at handling the roll or improved unwinding characteristics or both. Another desire was the provision of to a method of making a roll of acrylic foam tape as described above. A further desire relates to a method for measuring the stability of a roll of tape, especially a level wound roll of tape, which method preferably allows for a simple way of testing whether the dimensional stability or the winding tension, or both, fulfill desired criteria with regard to handling characteristics of the roll.

A further desire was the provision of a method for making an elongate rubber seal that does suffer less from the disadvantages of prior art seals. It was especially desirable to provide a method of making an elongate rubber seal which conveniently results in an adhesive seal which has an improved stability and adhesion, especially when affixed on a curved surface. It was also a desire to provide a method of making an elongate rubber seal with a reduced number of zones with longitudinal compression or stretching or with a reduced extent of longitudinal compression or stretching or both.

The following is a summary of embodiments:
1. Roll of acrylic foam tape, comprising an acrylic foam tape comprising an acrylic foam with opposite first and second major sides, the first major side comprising a pressure sensitive adhesive protected by a first liner and the second major side comprising a heat activatable adhesive, the acrylic foam tape being level-wound in essentially helical convolutions around a core with a second liner arranged on the heat activatable adhesive, the second liner extending over at least one edge of the second major surface, wherein the acrylic foam is thermally crosslinked.
2. Roll according to embodiment 1, characterized in that the roll has a drop-test displacement of 0.5 to 50 mm.
3. Roll according to any of the preceding embodiments, characterized in that the foam tape has a length of 200m to 1500m.
4. Roll of acrylic foam tape according to any of the preceding embodiments, characterized in that the roll has a drop-test displacement of
   - 0.2 to 6 mm if the foam tape has a length of less than 400m,
   - 0.5 to 8 mm if the foam tape has a length of 400m to 700m,
   - 1 to 9 mm if the foam tape has a length of more than 700m to 1000m or
   - 2 to 10 mm if the foam tape has a length of more than 1000m.
5. Roll according to any of the preceding embodiments wherein the core is a cylinder with a length of 20 to 180 cm and a diameter of 5 to 30 cm and the tape is level-wound around the cylindrical core such that at least a first and a second substantially cylindrical level of convolutions, with reversing points at the end of each level, are formed, the second level surrounding the first level such that a first major side of the second level is in contact with a second major side of the first level or a second major side of the second level is in contact with a first major side of the first level, and the length of the first level measured along the central axis of the cylindrical core is 80 to 95% of the length of the core.
6. Roll according to embodiment 5, characterized in that it has three or more substantially cylindrical levels of convolutions and the length of each successive level, measured along the central axis of the cylindrical core and defined by the distance of the outermost edge of a first and a last convolution of such a level, is less than the length of its preceding level.
7. Roll according to any of the preceding embodiments , characterized in that the roll has at least a first and a second diameter, the first diameter being defined as the diameter of a cylinder comprising the outer surface of the first convolution of an outermost full layer or the last convolution of an outermost full layer, or both, and the second diameter being defined as the diameter of a cylinder comprising the outer surface of a convolution being essentially equidistant from the first convolution of the first layer and the last convolution of the first layer.
8. Roll according to embodiment 7, characterized in that the second diameter is 0.1 to 35% less than the first diameter.
9. Roll according to any of the preceding embodiments, characterized in that the convolutions have a helical angle and the helical angle is less than 20°, especially less than 10°.
10. Roll according to any of the preceding embodiments, characterized in that the second liner is more than 5%, especially more than 10% wider than the tape and is forming one or more overlap zones.
11. Roll according to one of the embodiments 9 or 10, characterized in that the helical angle and the width of the second liner are chosen such that a succeeding convolution is placed on an overlap zone of the second liner of the preceding convolution such that an overlap is formed.
12. Roll according to one of the preceding embodiments, characterized in that the foam layer has pressure sensitive adhesive properties itself or a pressure sensitive adhesive layer is applied to one major surface of the foam layer or both.
13. Roll according to one of the preceding embodiments, characterized in that the foam layer comprises caverns obtainable from expandable hollow microspheres.
14. Roll according to one of the preceding embodiments, characterized in that the foam layer has a thickness of from 0.1 to 3 mm.
15. Roll according to one of the preceding embodiments, characterized in that the foam comprises homopolymers, copolymers, mixtures of homopolymers or mixtures of copolymers or mixtures of one or more homopolymers and one or more copolymers selected from the group consisting of polyacrylates, polymethacrylates, polyacrylate/polymethacrylate copolymers.
16. Layered acrylic foam tape comprising a layer of thermally crosslinked acrylic foam with opposite first and second major sides, the first major side comprising a layer of pressure sensitive adhesive protected by a first liner and the second major side comprising a layer of heat activatable adhesive with a second liner arranged on the heat activatable adhesive, the second liner extending over the edge of the second major side.
17. Layered acrylic foam tape according to embodiment 16, wherein the second liner has a width that is larger than the width of the acrylic foam.
18. Layered acrylic foam tape according to embodiment 16 or 17, characterized in that the foam layer has been crosslinked with epoxide, aziridine, oxazoline, oxetane or isocyanate functional crosslinkers.
19. Layered acrylic foam tape according to any of embodiments 16 to 18, characterized in that the elastic modulus of the second liner is equal to or higher than the resultant elastic modulus of the layers of the foam tape.
20. Layered acrylic foam tape according to any of embodiments 16 to 19, characterized in that the second liner is made of a polyolefin or polyethylene terephthalate.
21. Method of making a roll of adhesive tape, wherein an adhesive tape comprising an acrylic foam with opposite first and second major sides, at least one major side comprising a pressure sensitive adhesive protected by a first liner and the second major side also comprising an adhesive, is wound around a cylindrical or elliptical core by feeding the tape to the core with a feed tension of between 0.5 and 5 N and a feed direction with a directional speed along the central axis of the core such that it is wound around the core in helical convolutions with a helical angle of less than 20°, preferably less than 10° or less than 5°, thus forming a first layer of tape around the core and reversing the feed direction at least once at a reversing point so that at least a second layer of helical convolutions of tape is formed on the first layer.
22. Method according to embodiment 21, characterized in that the feed direction is reversed three times or more.
23. Method according to embodiment 21 or 22, characterized in that the first level is fed with a first tension and each successive level is fed with a successive tension and each successive tension is lower than the preceding tension.
24. Method according to any of embodiments 21 to 23, characterized in that the directional speed increases in the direction towards a point equidistant from the reversing point and decreases towards a reversing point.
25. Method according to any of embodiments 21 to 24, characterized in that each succeeding reversing point is closer to a point equidistant from the preceding two reversing points than its predecessor.
26. Method according to any of embodiments 21 to 25, characterized in that the tape has a second liner arranged on a heat activatable adhesive on the second major side, the second liner extending over at least one edge of the tape.
27. Method according to any of embodiments 21 to 26, characterized in that the second liner has a width that is larger than the width of the acrylic foam.
28. Method according to any of embodiments 21 to 27, wherein the second liner is fed to the core separately from the foam tape.
29. Method according to any of embodiments 21 to 28, wherein the feed tension of the second liner is greater than the feed tension of the foam tape.
30. Method for measuring the stability of a roll of tape, preferably a level-wound roll of acrylic foam tape, wherein a tape roll wound in convolutions on a core having a length measured along a longitudinal axis of the core which is longer than the width of the tape roll, thus extending from the center of the roll, is subjected to a force pulse exerting a force on the levels of the roll in a direction which is essentially determined by the direction of the central axis of the cylindrical or elliptical core, and the displacement of a convolution of the roll is measured.
31. Method according to embodiment 30, wherein the roll is dropped from a specified height onto a solid platform such that it contacts the platform with the part of the core extending from the center of the roll, and measuring the displacement of a convolution of the tape roll in the drop direction.
32. Method according to embodiment 30 or 31, wherein the core is a hollow cylindrical core.
33. Method according to any of embodiments 30 to 32, wherein the core is extending from both sides of the roll of tape.
34. Method according to any of embodiments 30 to 33, wherein the drop is guided by having a cylinder movably inserted in the hollow core, the cylinder having an outer diameter slightly smaller than the inner diameter of the hollow core so that the cylinder can reversibly slide along the longitudinal axis of the hollow core, the cylinder being mounted perpendicular on a base plate, where the roll is dropped along the longitudinal axis of the cylinder from a predetermined height.
35. Method according to embodiment 34, wherein the cylinder has markers for determining the drop distance.
36. Method of making an elongate rubber seal for attachment to a door or a door frame, comprising:
   a. providing a level wound roll of acrylic foam tape as defined in any of embodiments 1 to 15 or made according to a method of any of embodiments 21 to 29;
   b. providing a roll of an elongate rubber material;
   c. providing a lamination apparatus comprising means for unwinding said roll of acrylic foam tape, means for unwinding said roll of elongate rubber material, means for heat laminating said acrylic foam tape to said rubber material and means for guiding said roll of acrylic foam tape and said elongate rubber material to the heat laminating means;
   d. unwinding said roll of acrylic foam tape;
   e. removing said second liner;
   f. conveying a resulting acrylic foam tape with the surface of the heat activatable adhesive layer exposed to the heat laminating means;
   g. unwinding the roll of elongate rubber material and conveying the elongate rubber material to the heat laminating means;
   h. heat laminating the elongate rubber material and acrylic foam tape to form an elongate rubber seal;
   i. winding the elongate rubber seal.
37. Method according to Embodiment 36, wherein the tension exerted to the second liner after removal is higher than the tension exerted to the resulting acrylic foam tape.

A first aspect of the invention thus relates to a roll of acrylic foam tape, comprising an acrylic foam tape comprising an acrylic foam with opposite first and second major sides, the first major side comprising a pressure sensitive adhesive protected by a first liner and the second major side comprising a heat activatable adhesive, the acrylic foam tape being level-wound in essentially helical convolutions around a core with a second liner arranged on the heat activatable adhesive, the second liner extending at least over one edge of the second major surface, e.g., by having a width that is larger than the width of the acrylic foam, wherein the acrylic foam is thermally crosslinked.

The term "adhesive tape" (sometimes also only referred to as "tape") as used according to the invention described by the present text, generally refers to a layered construct with at least a central layer having a first and a second major surface and one or both surfaces have adhesive properties or carrying a layer having adhesive properties or both, such that both major surfaces of the tape have adhesive properties.

The term "central layer" refers to a layer of the tape which is either the sole layer of the tape or a layer performing an essential function of the tape, such as a layer conferring mechanical properties or adhesive properties or a layer which is in the center of a multi-layer tape structure and has one or both of the above functions. If an adhesive tape has only two layers, any of the two layers can be the central layer for purposes of the present text. In case the tape has an even number of layers, one of the layers in the center of the layered construction is generally used as the central layer.

The term "adhesive properties" as used according to the present text relates to the property of a surface to reversibly or permanently adhere to another surface. An "adhesive property" can be present at a wide temperature range or a restricted temperature range, e.g., within an interval of from about -50°C to about 50°C, or about 100°C, or about 200°C and can be present at room temperature, or it can be present at elevated temperatures only, e.g., at a temperature starting at about 50°C or above, e.g., at about 80°C, or about 100 °C or about 200°C or about 300 °C or higher. In the first case the adhesive property can be conferred to the tape in the form of a pressure sensitive adhesive (PSA), in the second case the adhesive property can be conferred to the tape in the form of a heat activatable adhesive (HAA). The adhesive properties on the first and the second major surface of the central layer of a tape according to the invention can be inherent properties of the central layer, i.e., the central layer can itself be made of a material with adhesive properties. It is, however, also encompassed by the term "tape", or "adhesive tape", that a central layer, irrespective of any inherent adhesive properties, carries on ore more layers on the first or the second or both major sides of the central layer which infer adhesive properties to the adhesive tape.

An adhesive tape can consist of only a central layer with adhesive properties on both major surfaces. It can also comprise a central layer with adhesive properties on both, one or none of the major surfaces, in which case the central layer is covered on one or both sides with a layer of adhesive such that both major surfaces of the adhesive tape have adhesive properties. A central layer can carry a layer of an adhesive on a major surface irrespective of the inherent adhesive properties of the surface.

The term "adhesive tape", as used according to the present text, can thus refer to a tape structure having first and second major sides and having two or more layers, e.g., three, four or five layers or more. A "tape" according to the present text can be an adhesive tape, i.e., a tape which has at least one major side with adhesive properties.

The term "acrylic adhesive foam tape" relates to a tape as described above, which comprises a foam layer having first and second major sides and a pressure sensitive adhesive layer associated with one of the major sides of the foam layer, the pressure sensitive adhesive preferably comprising a cross-linked rubber, and the foam layer comprises an acrylic polymer of one or more alkyl acrylates having an average of 3 to 14 carbon atoms in the alkyl group, the foam layer having a density of at least 150 kg/m³, especially at least 300 kg/m3 or at least 540 kg/m³.

The term "associated with" as used in connection with the present invention means that the relevant layer is provided directly on the surface or indirectly through the intermediary of one or more layers such as primer layers for example.

The term "pressure sensitive adhesive" is used to indicate materials (e.g., elastomers) that are either inherently tacky or that have been tackified with the addition of tackifying resins. Pressure sensitive adhesives according to the present invention include those that can be identified by any of the known methods for identifying pressure sensitive adhesives and include in particular those that can be identified by one or more of the following methods.

According to a first method, pressure sensitive adhesives may be defined by the Dahlquist criteria described in Handbook of Pressure Sensitive Adhesive Technology, D. Satas, 2nd ed., page 172 (1989) at use temperatures. This criterion defines a good pressure sensitive adhesive as one having a 1 second creep compliance of greater than 1 x 10-6 cm2/dyne.

Alternatively, since modulus is, to a first approximation, the inverse of compliance, pressure sensitive adhesives may be defined as adhesives having a modulus of less than 1 x 106 dynes/cm2.

Another method of identifying a pressure sensitive adhesive is that it is aggressively and permanently tacky at room temperature and firmly adheres to a variety of dissimilar surfaces upon mere contact without the need of more than finger or hand pressure as described in "Glossary of Terms Used in the Pressure Sensitive Tape Industry" provided by the Pressure Sensitive Tape Council, August, 1985.

Another suitable method of identifying a pressure sensitive adhesive is that it preferably has a room temperature storage modulus within the area defined by the following points as plotted on a graph of modulus versus frequency at 25°C: a range of moduli from approximately 2 x 10⁵ to 4 x 10⁵ dynes/cm² at a frequency of approximately 0.1 radian/second (0.017 Hz), and a range of moduli from approximately 2 x 10⁶ to 8 x 10⁶ dynes/cm2 at a frequency of approximately 100 radians/second (17 Hz) (for example, see Figure 8-16 on p. 173 Handbook of Pressure Sensitive Adhesive Technology, D. Satas, 2nd ed., (1989)).

The adhesive tape can comprise a foam layer having an acrylic polymer obtainable by polymerization of a polymerizable composition comprising one or more alkyl acrylates having an average of 3 to 14 carbon atoms in the alkyl group. In a particular embodiment, the polymerizable composition further includes one or more polar monomers and/or one or more multi-functional monomers having at least two free radical polymerizable groups.

In particular embodiment, the foam layer has pressure sensitive adhesive properties.

The one or more alkyl (meth)acrylates of the polymerizable composition are typically mono-functional monomers and include in particular alkyl (meth)acrylic acid ester of a non-tertiary alcohol in which the alkyl group contains at least about 3 carbon atoms (on average), and preferably contain an alkyl group comprising from 1 to 30, from 1 to 20, or even from 1 to 15 carbon atoms.

Examples of classes of suitable alky (meth)acrylic acid esters for use herein include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, iso-pentyl (meth)acrylate (i.e., iso-amyl (meth)acrylate), 3-pentyl (meth)acrylate, 2-methyl-1-butyl (meth)acrylate, 3-methyl-1-butyl (meth)acrylate, stearyl (meth)acrylate, phenyl (meth)acrylate, n-hexyl (meth)acrylate, iso-hexyl (meth)acrylate, cyclohexyl (meth)acrylate, 2-methyl-1-pentyl (meth)acrylate, 3-methyl-1-pentyl (meth)acrylate, 4-methyl-2-pentyl (meth)acrylate, 2-ethyl-1-butyl (meth)acrylate, 2-methy-1-hexyl (meth)acrylate, 3,5,5-trimethyl-1-hexyl (meth)acrylate, cyclohexyl (meth)acrylate, 3-heptyl (meth)acrylate, benzyl (meth)acrylate, n-octyl (meth)acrylate, iso-octyl (meth)acrylate, 2-octyl (meth)acrylate, 2-ethyl-1-hexyl (meth)acrylate, n-decyl (meth)acrylate, iso-decyl (meth)acrylate, isobornyl (meth)acrylate, 2-propylheptyl (meth)acrylate, isononyl (meth)acrylate, isophoryl (meth)acrylate, n-dodecyl (meth)acrylate (i.e., lauryl (meth)acrylate), n-tridecyl (meth)acrylate, iso-tridecyl (meth)acrylate, 3,7-dimethyl-octyl (meth)acrylate, and any combinations or mixtures thereof.

Various combinations of such monomers can be employed. For example, a combination of two or more alkyl(meth) acrylates may be used such as a combination of 2-ethylhexyl acrylate and isooctyl acrylate.

In a particular embodiment, the polymerizable composition further includes one or more polar monomers, typically monofunctional polar monomers. Examples thereof include in particular acidic monomers such as carboxylic acid monomers as well as various acrylamides. Particular examples of polar monomers include acrylic acid, methacrylic acid, itaconic acid, maleic acid, fumaric acid, 2-hydroxyethyl acrylate or methacrylate, N-vinyl pyrrolidone, N-vinyl caprolactam, acrylamide, methacrylamide, N-substituted and N,N-disubstituted acrylamides such as N-ethyl acrylamide, N-hydroxyethyl acrylamide, N,N-dimethyl acrylamide, N,N-diethyl acrylamide, and N-ethyl-N-dihydroxyethyl acrylamide, acrylonitrile, methacrylonitrile and maleic anhydride. Preferred polar monomers include, but are not limited to, acrylic acid, itaconic acid, N,N-dimethyl acrylamide, acryl amide, N-vinyl pyrrolidone and N-vinyl caprolactam. Various combinations of such polar monomers can be employed and in a particular embodiment a combination of two or more polar monomers is contemplated such as for example a combination of acrylic acid and itaconic acid.

In a particular embodiment, the polymerizable composition from which the acrylic polymer of the foam layer can be derived further includes one or more multi-functional monomers that have two or more ethylenically unsaturated groups. Examples of multi- functional monomers include in particular multi-functional acrylic monomers but other multi- functional monomers such as butadiene and substituted triazines such as vinyl-halomethyl-s-triazine type compounds such as for example 2,4-bis(trichloromethyl)-6-p-methoxystyryl-s-triazine. Preferred are polyacrylic-functional monomers such as, for example, pentaerythritol tetraacrylate, tripropyleneglycoldiacrylate, 1,12-dodecanediol diacrylate. Particular preferred examples of multi-functional acrylic monomers include 1,2 ethylene glycol diacrylate, hexane diol diacrylate and trimethylol propane triacrylate. The multi-functional monomers, when included in the polymerizable composition from which the acrylic polymer may be obtained are typically present in an amount of 0.01 and 1%.

In particular embodiments, the acrylic polymer of the foam layer is typically obtainable from a polymerizable composition having a major amount of the one or more alkyl acrylates, for example at least 84% by weight (based on the total weight of monomers in the composition). A typical range is from 84 to 97% by weight or from 88 to 94% by weight.

When present, the amount of multi-functional monomer or monomers in the polymerizable composition is typically at least 0.01% by weight and may range for example from 0.01% by weight to 1% or less by weight of the total weight of monomers in the composition or for example from 0.1 to 0.5% by weight. The polar monomer or monomers, when included, are typically present in amount of at least 3% by weight of the total weight of monomers in the composition, an exemplary range being from 3 to 16% or from 5 to 12% by weight.

The polymerizable composition may contain further components including in particular a thixotropic agent. Examples of thixotropic agents include fumed silica. The polymerizable composition may also contain microsphere such as for example hollow glass bubbles or polymeric microspheres. Furthermore, it may be desirable to include a surfactant in the polymerizable composition. Tackifiers, in particular tackifiers suitable for use with acrylic adhesives may be added as well. Examples thereof include in particular rosin esters, aromatic resins, aliphatic resins, terpenes and partially hydrogenated and hydrogenated resins.

The polymerizable composition typically also includes an initiator for initiating a free radical polymerization including thermal as well as photo-initiators. Photoinitiators are preferred for use in connection with this invention. Examples of suitable photoinitiators can be found in U.S. Patent Nos. 4,181,752 (Martens et al.), 4,833,179 (Young et al.), 5,804,610 (Hamer et al.), 5,382,451 (Johnson et al.), 4,619,979 (Kotnour et al.), 4,843,134 (Kotnour et al.), and 5,637,646 (Ellis). A particular example includes 2,2 dimethoxy-2-phenylacetophenone.

The polymerizable composition further comprises at least one thermal crosslinker for achieving thermal crosslinking. Suitable thermal crosslinkers are described below.

The foam layer of the adhesive tape will typically have a thickness of at least 0.1 mm, for example at least 0.2 mm. A typical thickness range for the foam layer is from 0.25 mm up to 3 mm, for example from 0.3 mm up to 2.5 mm or from 0.4 mm to 2 mm.

In one embodiment, the foam layer is typically obtained and produced according to the methods described in US 4,415,615. The process typically comprises frothing the polymerizable composition, coating the froth on a backing such as for example a release liner and polymerizing the polymerizable composition.

Frothing is conveniently accomplished by whipping a gas into the polymerizable composition. Useful frothing gases typically are inert and include nitrogen gas or carbon dioxide. In a particular embodiment, the monomers of the polymerizable composition may be partially polymerized prior to frothing so as to achieve a desirable viscosity for the frothing step. Useful viscosities to froth a composition are typically between 1000 and 40,0000 cps. The viscosity is typically selected so as to achieve a desired cell uniformity. For example, above 5000 cps, higher cell uniformity will typically be obtained.

Additionally and alternatively to using prepolymerization to achieve a desired viscosity, a thixotropic agent such as fumed silica may be used. In such case, polymerization may be carried out in one step.

Polymerization of the polymerizable composition may be carried out by heat activation but preferably is photoinitiated and hence the polymerizable composition will typically contain a photoinitiator. Typically, photoinitiation is carried out by UV irradiation and a UV initiator will be used. If the polymerization is carried out in two steps (in case of prepolymerization to enable a suitable viscosity as described above), the amount of photo- initiator initially used may be enough to allow initiation of further polymerization. Typically however, a further addition of photoinitiator may be desired to initiate further polymerization following frothing.

When the polymerization is to be effected by ultraviolet radiation, the polymerizable coating is preferably protected from air by a plastic film overlay which is fairly transparent to ultraviolet radiation and has a low-adhesion surface. Biaxially-oriented polyethylene terephthalate film which is about 75% transparent to ultraviolet radiation is very useful. If the underlying backing also has a low-adhesion surface, both the backing and the transparent plastic film can be stripped away so that the cellular adhesive membrane may be used for mounting objects. For such use, the cellular membrane may be reinforced by a tissue-like web to avoid becoming distorted if it is to be removed from both the backing and the transparent overlay before being applied.

If instead of covering the polymerizable coating, the polymerization is to be carried out in an inert atmosphere, the permissible oxygen content of the inert atmosphere can be increased by mixing into the polymerizable composition an oxidizable tin compound as taught in U.S. Pat. No. 4,303,485 (Levens), which also teaches that by doing so, thick coatings can be polymerized in air.

Regardless of the process by which the cellular structure of the adhesive membrane is created, it is preferred to include a surfactant in the composition, preferably a silicone or fluorochemical known to be useful for foaming organic liquids that have low surface tension.

By doing so, foams with cellular adhesive membranes of good uniformity can be produced wherein the cells have an average diameter within the range of 0.05 to 0.3 mm. Typically, 90% of the cells of the adhesive membrane vary in size no more than 2:1, but some of the adhesive membranes have been characterized by significant variations in cell size.

The frothed compositions are finalized by thermal crosslinking.

In addition to or alternative to the use of frothing to obtain a foam layer, hollow microspheres may be included in the polymerizable composition. The microspheres may include expandable and non-expandable microspheres. Expandable microspheres (hereinafter also called microballoons) are spheres that expand upon heating and include in particular expandable polymeric microspheres that include a polymer shell and a core material in the form of a gas, liquid or combination thereof that expands upon heating. An expandable microsphere is one where the shell can initially be expanded or further expanded without breaking.

Microballoons or microspheres are approximately spherical hollow bodies having an elastic and thermoplastic polymer shell, accordingly, they are also referred to as expandable polymeric microspheres or as hollow microbeads. Microballoons are filled with low-boiling liquids or with liquefied gas. Shell materials used include more particularly polyacrylonitrile, polyvinyl dichloride (PVDC), polyvinyl chloride (PVC), polyamides or polyacrylates. Suitable low-boiling liquids are, more particularly, hydrocarbons of the lower alkanes, for example isobutane or isopentane, which are enclosed as liquefied gas under pressure in the polymer shell.

Action on the microballoons - more particularly by supply of heat or generation of heat, as for example by ultra-sound or microwave radiation - causes, first, a softening of the outer polymer shell, while at the same time the liquid blowing gas present in the shell undergoes transitions of its gaseous state. At a particular pairing of pressure and temperature, identified for the purposes of this specification as the critical pairing, the microballoons undergo irreversible expansion, and expand three-dimensionally. The expansion is at an end when the internal pressure equals the external pressure. Since the polymeric shell is maintained, a closed-celled foam is achieved in this way.

A large number of types of microballoons are available commercially, such as, for example, from Akzo Nobel, the Expancel DU products (dry unexpanded), which differ essentially in their size (6 to 45 µm in diameter in the unexpanded state) and in the starting temperature they require for expansion (75° C. to 220° C.).

Furthermore, unexpanded types of microballoons are also available in the form of an aqueous dispersion, with a solids fraction or microballoon fraction of around 40% to 45% by weight, and also in the form of polymer-bound microballoons (masterbatches), for example in ethylene-vinyl acetate, with a microballoon concentration of around 65% by weight. Obtainable, furthermore, are what are called microballoon slurry systems, in which the microballoons are present in the form of an aqueous dispersion with a solids fraction of 60% to 80% by weight. The microballoon dispersions, the microballoon slurries, and the masterbatches, like the DU products, are suitable for the foaming of acrylic tapes in accordance with the process of the invention.

Methods for making a foamed layer using expandable microspheres are disclosed in WO 00/006637 and US 2011/0281964 A1. Examples of suitable expandable microspheres include those commercially available from Pierce Stevens (Buffalo, NY) under designations F30D, D80SD and F100D. Further useful expandable microspheres include Expancel 551, Expancel 461 and Expancel 091, available from Akzo Nobel. Each of these microspheres has an acrylonitrile-containing shell. The non-expandable microspheres may be polymeric or non-polymeric. Particularly suitable non-expandable microspheres include hollow glass bubbles.

The foam layer should have a density of at least 150 kg/m3 or at least 300 kg/m³ or at least 540 kg/m³, typically at least 570 kg/m³ or at least 600 kg/m³. Generally, a higher density has been found to improve the performance of the adhesive tape when applied to door frames and in particular, the adhesion at areas of strong curvature may be improved. However, the density should not be so high that the foam layer loses its foam characteristics. Typically, the maximum density should not exceed 950 kg/m³, or in a particular embodiment should not exceed 850 kg/m³. The desired density can be obtained by the level of frothing and/or amount of hollow microspheres that is included in the composition for the foam layer.

The acrylic foam tapes prepared in accordance with the invention are advantageously crosslinked, in order to provide sufficient cohesion. It is therefore advantageous to add crosslinkers and optionally accelerants and/or inhibitors (retardants) to the polymer composition to be foamed. Below, the components added for initiation and for control, such as crosslinkers and accelerants, are also referred to jointly as "crosslinking system".

The acrylic adhesive tapes display particularly advantageous properties if the polymer composition of the central layer, e.g., the acrylic foam surrounding the hollow bodies, is homogeneously crosslinked. Although thick layers are not very easily crosslinked homogeneously via the conventional electron beam or UV ray treatment, owing to the rapid decrease in radiation intensity over the depth of penetration, thermal crosslinking nevertheless provides sufficient remedy to this. In the production of acrylic foam layers in accordance with the invention, e.g., such which are more than 150 µm thick, it is particularly advantageous if the polymer composition to be foamed is admixed with a thermal crosslinker system. In that case, of course, initially, in the sense of a particularly stable and error-tolerant process regime, preference should be given to a system whose activation temperature is below the highest temperature that occurs in the mixing operation, or, conversely, the mixing operation should be cooled so that the activation temperature is not attained in this operation.

The more precisely it is possible to manage all of the parameters in the mixing operation, in other words, in particular, all relevant local pressures, temperatures, rotational speed, metering operations, and viscosities, the closer the operating temperature may be allowed to come to the activation temperature - a temperature increase of this kind not only lowers the cooling performance requirement and the associated costs, but also allows a more rapid process regime, in other words a more favorable balance between throughput and mixer size -and, if a sufficiently slow activation system is selected, there may even be attainment of a temperature at the end of the mixing operation, as the inventors have recognized.

The slowness of the activation system that is necessary for this to be the case is achieved preferably through the antagonistic use of accelerants and retardants. Said antagonism results in the formation of a flattening in a region of the plot of the degree of crosslinking against the time of exposure to the elevated temperature, and hence provides, as an alternative to the attainment of a temperature below the activation temperature in the mixing operation, the required remainder of tolerance in sensitivity in the process regime.

Suitable thermal crosslinkers, particularly for polyacrylates, include isocyanates, more particularly trimerized isocyanates and/or sterically hindered isocyanates that are free of blocking agents, or else epoxide compounds such as epoxide/amine crosslinker systems. In both cases, functional groups should be present in the polymer macromolecules that are able to react with isocyanate groups or with epoxide groups, respectively. In order to attenuate the reactivity of the isocyanates and to extend the potlife during extrusion, it is possibly advantageously to use isocyanates blocked with functional groups that can be eliminated thermally. For blocking it is preferred to use, for example, aliphatic primary and secondary alcohols, phenol derivatives, aliphatic primary and secondary amines, lactams, lactones, and malonic esters.

Where epoxide-amine systems are used as crosslinker systems, the amines can be converted into their salts in order to ensure an increase in the potlife. In that case, volatile organic acids (formic acid, acetic acid) or volatile mineral acids (hydrochloric acid, derivatives of carbonic acid) are preferred for salt formation.

Advantageous crosslinker systems and suitable methods for allowing processing of the polymer composition in the melt with such crosslinkers are described in, for example, the specifications EP 0 752 435 A, EP 1 802 722 A, EP 1 791 921 A, EP 1 791 922A, EP 1 978 069 A, and DE 10 2008 059 050 A. The crosslinker or, in the case of crosslinker systems, at least one constituent of the crosslinker system (for example, either the crosslinker or the accelerant) is added to the melt only at a late stage and is immediately mixed in very homogeneously (by efficient mixing, as for example in an extruder), in order to make the residence time of the reactive system in the polymer melt very short and therefore the processing life ("potlife") as long as possible.

Substances used that contain epoxide groups are, in particular, polyfunctional epoxides, in other words those, which contain at least two epoxide units per molecule (i.e. are at least difunctional). They may be both aromatic and aliphatic compounds. Outstandingly suitable polyfunctional epoxides are oligomers of epichlorohydrin, epoxy ethers of polyhydric alcohols (especially ethylene, propylene and butylene glycols, polyglycols, thiodiglycols, glycerol, pentaerythritol, sorbitol, polyvinyl alcohol, polyallyl alcohol and the like), epoxy ethers of polyhydric phenols (in particular resorcinol, hydroquinone, bis(4-hydroxyphenyl)methane, bis(4-hydroxy-3-methylpheny-1)methane, bis(4-hydroxy-3,5-dibromophenyl)methane, bis(4-hydroxy-3,5-difluorophenyl)methane, 1,1-bis(4-hydroxyphenyl)ethane, 2,2-bis(4-hydroxyphenyl)propane, 2,2-bis(4-hydroxy-3-methylphenyl)propane, 2,2-bis(4-hydroxy-3-chlorophenyl)propane, 2,2-bis(4-hydroxy-3,5-dichlorophenyl)propane, 2,2-bis(4-hydroxy-3,5-dichlorophenyl)propane, bis(4-hydroxyphenyl)phenylmethane, bis(4-hydroxyphenyl)phenylmethane, bis(4-hydroxyphenyl)diphenylmethane, bis(4-hydroxyphenyl)-4'-methylphenylmethane, 1,1-bis(4-hydroxyphenyl)-2,2,2-trichlorothane, bis(4-hydroxyphenyl)-(4-chlorophenyl)methane, 1,1-bis(4-hydroxyphenyl)cyclohexane, bis(4-hydroxyphenyl)cyclohexylmethane, 4,4'-di-hydroxybiphenyl, 2,2'dihydroxybiphenyl, 4,4'-dihydroxydiphenyl sulphone) and also their hydroxyethyl ethers, phenol-formaldehyde condensation products, such as phenol alcohols, phenol-aldehyde resins and the like, S- and N-containing epoxides (for example N,N-diglycidylaniline, N,N'-dimethyldiglycidyl-4,4-diaminodiphenylmethane) and also epoxides which have been prepared by standard methods from polyunsaturated carboxylic acids or monounsaturated carboxylic acid residues of unsaturated alcohols, glycidyl esters. Polyglycidyl esters which can be obtained by polymerizing or copolymerizing glycidyl esters of unsaturated acids or are obtainable from other acidic compounds (cyanuric acid, diglycidyl sulphide, cyclic trimethylene trisulphone and/or their derivatives and others).

Examples of very suitable ethers are 1,4-butanediol diglycidyl ether, polyglycerol-3 glycidyl ether, cyclohexanedimethanol diglycidyl ether, glycerol triglycidyl ether, neopentylglycol diglycidyl ether, pentaerythritol tetraglycidyl ether, 1 ,6-hexanediol diglycidyl ether, polypropylene glycol diglycidyl ethers, trimethylolpropane triglycidyl ether, bisphenol A diglycidyl ether and bisphenol-F diglycidyl ether.

The crosslinking reaction can be supported by the presence of a common accelerator.

Having been found particularly preferable for the process of the invention is a crosslinker-accelerant system, more particularly for the crosslinking of polymers, more particularly of polyacrylates, having functional groups which are suitable for entering into linking reactions with epoxide groups, comprising at least one epoxide-group-containing substance as crosslinker and, as accelerant, at least one substance which has an accelerating effect on the linking reaction at a temperature below the melting temperature of the polyacrylate.

Examples of suitable epoxide-group-containing substances include polyfunctional epoxides, more particularly bifunctional or trifunctional epoxides (i.e., epoxides having two or three epoxide groups, respectively), but also epoxides of higher functionality, or mixtures of epoxides with different functionalities. As accelerants it is preferred to use amines (to be interpreted formally as substitution products of ammonia), examples being primary and/or secondary amines; more particularly, tertiary and/or polyfunctional amines are used. U se may also be made of amines of the kind having two or more amine groups, these amine groups being able to be primary and/or secondary and/or tertiary amine groups; more particularly, diamines, triamines or tetramines or mixtures of two or more thereof.

A selection is made in particular of those amines which enter into no reactions or only slight reactions with the polymer units. As accelerants it is additionally possible, for example, to use those based on phosphorus, such as phosphines and/or phosphonium compounds.

By means of this process it is possible in particular to carry out foaming and crosslinking of polymers based on acrylic esters and/or methacrylic esters, and advantageously at least some of the esters contain the functional groups, and/or comonomers are present which contain the functional groups. Suitable functional groups of the polymer to be crosslinked, more particularly based on (meth)acrylate, are, in particular, acid groups (carboxylic acid, sulphonic acid and/or phosphonic acid groups) and/or hydroxyl groups and/or acid anhydride groups and/or epoxide groups and/or amine groups, selected in particular in line with the respective crosslinker. It is particularly advantageous if the polymer comprises copolymerized acrylic acid and/or methacrylic acid.

It may, however, also be advantageous to do without accelerants, since accelerants, for ex-anlple, may tend toward yellowing (particularly, for example, nitrogen-containing substances), and this may be disruptive, for example, for transparent polymers and (pressure-sensitive) adhesives for applications in the optical sector. Examples of suitable crosslinkers which manage without additional addition of accelerant and for which accelerants can be dispensed with when they are used, include epoxycyclohexyl derivatives; particularly when carboxylic acid groups are present in the polymer to be crosslinked, more particularly based on (meth)acrylate. This may be realized, for example, through at least 5% by weight of copolymerized acrylic acid in the polymer. In the polymer to be crosslinked there are advantageously, in particular, no proton acceptors, no electron-pair donors (Lewis bases) and/or no electron-pair acceptors (Lewis acids) present, and more particularly none added. This absence refers in particular to externally added accelerants (in other words, those which are not copolymerized or incorporated into the polymer framework), but with particular preference neither externally added nor copolymerized accelerants are present, and very preferably none at all.

With advantage, using the aforementioned crosslinkers or crosslinker-accelerant systems, or other substances which initiate thermal crosslinking, it is possible to adopt a procedure in which the crosslinking of the polymer to be crosslinked, more particularly of the polyacrylate, is initiated in the melt and the polymer is subsequently cooled at a point in time at which crosslinking has been concluded to an extent of less than 10%. With further preference, initiation can take place in a processing reactor which in particular is one of the mixing assemblies identified below. This may be a mixing assembly in which microballoons are added, or else a different mixing assembly. Following the initiation, the polymer to be crosslinked and to be foamed is taken from the processing assembly and foams following its removal, with removal generally being accompanied itself by a drop in temperature. Subsequently, the polymer composition is shaped. Crosslinking then proceeds, as a result of the choice of the crosslinker-accelerant system, after cooling as well, until the final degree of crosslinking has been reached. Preferably the crosslinking reaction proceeds at room temperature, and so cooling takes place to room temperature.

The major part of the crosslinking reaction preferably takes place only after the shaping of the foamed polymer, more particularly after it's shaping to a layer, and preferably at room temperature.

As a result of this procedure it is possible to optimize two process aspects with respect to one another: namely, first, a minimal crosslinking reaction prior to shaping, in order largely to prevent unwanted and uncontrolled premature crosslinking and the corresponding gelling (formation of regions of relatively high crosslinking-gel specks, for example-within the polymer melt), while, second, having a very high mixing efficiency of the crosslinker or crosslinker system components in the relatively short residence time in the polymer melt prior to coating, in order actually to guarantee a very homogeneously crosslinked end product.

The use of the thermal crosslinkers or thermal crosslinker systems is especially advantageous for foamed polymer compositions when, as a result of the caverns, the penetration of actinic radiation (such as UV radiation, for example) into the layer is hindered. As a result of the phase transitions at the cavern shells there are refraction effects and scattering effects, and so the inner regions of the layer cannot be reached by the radiation, or can be reached only to a strongly reduced extent, and this effect is superimposed on the aforementioned effect of a depth of penetration which is limited per se. Here, the thermal crosslinking of foamed polymer compositions is of advantage with respect to several different aspects of tape production. E.g., for achieving a homogeneously crosslinked polymer matrix resulting in tapes with a higher tensile strength, for the production of tapes with a particularly high thickness, which could not be attained by radiation crosslinking only or the production of tape which would absorb radiation initiating a crosslinking reaction due to color or other radiation absorbing features of the tape material. Thus, also the production of deeply colored tapes is possible, e.g., deep black tapes, which can not be obtained otherwise with methods relying on radiation only. Also the production of optically clear tapes is alleviated, since the formation of radiation cleavage products resulting in areas with different refractive indices is avoided.

The acrylic foam tapes of the invention are conveniently thermally crosslinked. The term "thermally crosslinked, however, does not exclude that at some stage of the production process of the acrylic foam another crosslinking method is employed to supplement the thermal crosslinking process, e.g., to achieve a specific surface structure or surface effect.

Suitable crosslinking methods for the tapes produced according to the invention or used according to the invention, generally include radiation initiated crosslinking methods, more particularly by actinic or ionizing radiation such as electron beams and/or ultraviolet radiation, and/or thermally initiated crosslinking methods, the latter also being taken to include the systems where the activation energy can be overcome even at room temperature or below without additional application of radiation, such as actinic or ionizing radiation.

Radiation-initiated crosslinking may be obtained by a conventional procedure, more particularly by bombardment with electron beams and/or with UV radiation. For this purpose, advantageously, corresponding radiation-activatable crosslinkers are added to the polymer composition that is to be crosslinked.

In order to obtain a uniform surface on both sides in the case of layers, particularly in the case of carrier layers or double-sidedly adhesively furnished adhesive tapes, such as self-adhesive tapes or heat-activatably bonding adhesive tapes, or in the case of viscoelastic carrier layers, it is possible to adopt a procedure in which these products are irradiated on both sides, more particularly under the same conditions.

In the case of crosslinking with electron beams, use is made advantageously of a typical irradiation apparatus, such as linear cathode systems, scanner systems or segmented cathode systems, in each case configured as electron beam accelerators. Typical acceleration voltages are situated in the range between 50 kV and 500 kV, preferably 80 kV and 300 kV. The scattered doses employed range, for example, between 5 to 150 kGy, more particularly between 20 and 100 kGy. For this purpose the common crosslinking substances (electron beam crosslinkers) may be added to the polymer composition.

Particular preference is given to irradiation with exclusion of air through inertization with nitrogen or noble gases or through double-sided lining with release materials, such as release-furnished films.

For optional crosslinking with UV light, UV-absorbing photoinitiators, and more particularly compounds of the kind which react to UV activation by forming free radicals, are added to the acrylate-containing PSAs.

Outstandingly suitable UV photoinitiators are those compounds which on UV irradiation exhibit a photo fragmentation reaction (more particularly a cleavage in a position a to a photochemically excitable functional group). Photoinitiators of this kind are those of the Norrish I type. Further outstandingly suitable photoinitiators are those compounds which on UV irradiation react with an intermolecular hydrogen abstraction, triggered by a photochemically excited functional group, more particularly in y position. Photoinitiators of this kind are counted among the Norrish II type. It may be advantageous, furthermore, to use copolymerizable photoinitiators, by incorporating, into the polymer to be crosslinked, by copolymerization, monomers having functional groups which are able to initiate crosslinking reactions as a result of activation with UV rays.

It can be of advantage if the polymer compositions are polymerized and/or crosslinked by means of actinic and/or ionizing radiation, in combination with a thermal crosslinking step. In these cases, a prepolymerization or polymerization step may be carried out by actinic and/or ionizing radiation in the absence of UV crosslinkers and/or of electron beam crosslinkers, and so the products obtained also do not have any UV crosslinkers and/or any EBC crosslinkers and/or reaction products thereof. A thermal crosslinking step can then be added as a succeeding step. If the crosslinking is attained by a combination of actinic and/or ionizing radiation and thermal crosslinking, both crosslinking methods can be applied at the same time. However, it can be preferred, if the crosslinking step is attained by thermal crosslinking only.

A homogeneously crosslinked polymer matrix is especially favorable for level wound rolls of foam tapes, as it allows for the formation of tapes with very uniform mechanical features which is advantageous in terms of the formation of rolls with uniform properties.

The foam tape can have adhesive properties by itself on one or more of its major surfaces, or it can be non-adhesive on all of its major surfaces. In the latter case, at least one of the major surfaces is covered at least partially or in full by a layer of pressure sensitive adhesive.

In the latter case, the foam layer is provided with a pressure sensitive adhesive layer (also called skin layer) that comprises a cross-linked rubber. The cross-linked rubber may be obtained from crosslinking, typically through e-beam, of a cross- linkable block copolymer that has a rubbery block and a glassy block. Generally, a rubbery block exhibits a glass transition temperature (Tg) of less than room temperature. In some embodiments, the Tg of the rubbery block is less than about 0 °C, or even less than about -10°C. In some embodiments, the Tg of the rubbery block is less than about -40 °C, or even less than about -60 °C.

Generally, a glassy block exhibits a Tg of greater than room temperature. In some embodiments, the Tg of the glassy block is at least about 40 °C, at least about 60 °C, at least about 80 °C, or even at least about 100 °C.

A suitable block copolymer includes one or more a rubbery blocks, R, and one or more glassy blocks, G. In some embodiments, the block copolymer comprises at least three glassy blocks. In some embodiments, the block copolymer comprises between three and five glassy blocks, inclusive. In some embodiments, the block copolymer comprises four glassy blocks.

In some embodiments, the block copolymer is a multi-arm block copolymer having the general formula Qₙ-Y, wherein Q represents an arm of the multi-arm block copolymer; n represents the number of arms and is a whole number of at least 3; and Y is the residue of a multifunctional coupling agent. Each arm, Q, independently has the formula R-G, wherein G represents the glassy block; and R represents the rubbery block.

In some embodiments, the rubbery block comprises a polymerized conjugated diene, a hydrogenated derivative of a polymerized conjugated diene, or combinations thereof. In some embodiments, the conjugated dienes comprise 4 to 12 carbon atoms. Exemplary conjugated dienes include butadiene, isoprene, ethylbutadiene, phenylbutadiene, piperylene, pentadiene, hexadiene, ethylhexadiene, and dimethylbutadiene. The polymerized conjugated dienes may be used individually or as copolymers with each other. In some embodiments, the conjugated diene is selected from the group consisting of isoprene, butadiene, ethylene butadiene copolymers, and combinations thereof.

In some embodiments, at least one glassy block comprises a polymerized monovinyl aromatic monomer. In some embodiments, both glassy blocks of a triblock copolymer comprise a polymerized monovinyl aromatic monomer. In some embodiments, the monovinyl aromatic monomers comprise 8 to 18 carbon atoms. Exemplary monovinyl aromatic monomers include styrene, vinylpyridine, vinyl toluene, alpha-methyl styrene, methyl styrene, dimethylstyrene, ethylstyrene, diethyl styrene, t-butylstyrene, di-n- butylstyrene, isopro-pylstyrene, other alkylated-styrenes, styrene analogs, and styrene homologs. In some embodiments, the monovinyl aromatic monomer is selected from the group consisting of styrene, styrene-compatible monomers or monomer blends, and combinations thereof.

As used herein, "styrene-compatible monomers or monomer blends" refers to a monomer or blend of monomers, which may be polymerized or copolymerized, that preferentially associate with polystyrene or with the polystyrene endblocks of a block copolymer. The compatibility can arise from actual copolymerization with monomeric styrene; solubility of the compatible monomer or blend, or polymerized monomer or blend in the polystyrene phase during hot melt or solvent processing; or association of the monomer or blend with the styrene-rich phase domain on standing after processing.

In the general formula for some multi-arm block copolymers of the present disclosure, Qn-Y, n represents the number of arms and is a whole number of at least 3, i.e., the multi-arm block copolymer is a star block copolymer. In some embodiments, n ranges from 3 to 10. In some embodiments, n ranges from 3-5. In some embodiments, n is 4. In some embodiments, n is equal to 6 or more.

In some embodiments, the first block copolymer is a polymodal block copolymer. As used herein, the term "polymodal" means that the copolymer comprises glassy blocks having at least two different molecular weights. Such a block copolymer may also be characterized as having at least one "high" molecular weight glassy block, and at least one "low" molecular weight glassy block, wherein the terms high and low are used relative to each other. In some embodiments the ratio of the number average molecular weight of the high molecular weight glassy block, (Mₙ)H, relative to the number average molecular weight of the low molecular weight glassy block,(Mₙ)L, is at least about 1.25.

In some embodiments, (Mₙ)H ranges from about 5,000 to about 50,000 g/mol. In some embodiments, (Mₙ)H is at least about 8,000, and in some embodiments at least about 10,000. In some embodiments, (Mₙ)H is no greater than about 35,000 g/mol. In some embodiments, (Mₙ)L ranges from about 1,000 to about 10,000 g/mol. In some embodiments, (Mₙ)L is at least about 2,000, and, in some embodiments, at least about 4,000. In some embodiments, (Mₙ)L is less than about 9,000 g/mol, and, in some embodiments, less than about 8,000 g/mol.

In some embodiments, the first block copolymer is an asymmetric block copolymer. As used herein, the term "asymmetric" means that the arms of the block copolymer are not all identical. Generally, a polymodal block copolymer is an asymmetric block copolymer (i.e., a polymodal asymmetric block copolymer) as not all arms of a polymodal block copolymer are identical since the molecular weights of the glassy blocks are not all the same. In some embodiments, the block copolymers of the present disclosure are polymodal, asymmetric block copolymers. Methods of making asymmetric, polymodal block copolymers are described in, e.g., U.S. Patent No. 5,296,547.

Generally, the multifunctional coupling agent may be any polyalkenyl coupling agent or other material known to have functional groups that can react with carbanions of the living polymer to form linked polymers. The polyalkenyl coupling agent may be aliphatic, aromatic, or heterocyclic. Exemplary aliphatic polyalkenyl coupling agents include polyvinyl and polyalkyl acetylenes, diacetylenes, phosphates, phosphites, and dimethacrylates (e.g., ethylene dimethacrylate). Exemplary aromatic polyalkenyl coupling agents include polyvinyl benzene, polyvinyl toluene, polyvinyl xylene, polyvinyl anthracene, polyvinyl naphthalene, and divinyldurene. Exemplary polyvinyl groups include divinyl, trivinyl, and te-travinyl groups. In some embodiments, divinylbenzene (DVB) may be used, and may include o- divinyl benzene, m-divinyl benzene, p-divinyl benzene, and mixtures thereof. Exemplary heterocyclic polyalkenyl coupling agents include divinyl pyridine, and divinyl thiophene. Other exemplary multifunctional coupling agents include silicon halides, polyepoxides, polyisocyanates, polyketones, polyanhydrides, and dicarboxylic acid esters.

Still further, the cross-linked rubber of the pressure sensitive adhesive layer may be obtained from the cross-linking of a linear block copolymer of the formula

R-(G)m

wherein R represents a rubbery block, G represents a glassy block, and m, the number of glassy blocks, is 1 or 2. In some embodiments, m is one, and the linear block copolymer is a diblock copolymer comprising one rubbery block and one glassy block. In some embodiments, m is two, and the linear block copolymer comprises two glassy endblocks and one rubbery midblock, i.e., the linear block copolymer is a triblock copolymer.

In some embodiments, the rubbery block of the linear block copolymer comprises a polymerized conjugated diene, a hydrogenated derivative thereof, or combinations thereof. In some embodiments, the conjugated dienes comprise 4 to 12 carbon atoms. Exemplary conjugated dienes useful in the second block copolymer include any of the exemplary conjugated dienes described above.

In some embodiments, at least one glassy block, and in some embodiments, each glassy block of the linear block copolymer comprises a polymerized monovinyl aromatic monomer. In some embodiments, the monovinyl aromatic monomers comprise 8 to 18 carbon atoms. Exemplary polymerized monovinyl aromatic monomers useful in the second block copolymer include any of the exemplary polymerized monovinyl aromatic monomer, as described above.

In a particular embodiment a mixture of the linear block copolymer and the aforementioned and described multi-arm block copolymer is used to obtain the cross-linked rubber of the pressure sensitive adhesive layer. In some embodiments, the ratio of multi-arm block copolymers to linear block copolymers ranges from 1.5:1 to 9:1. In some embodiments, the ratio of multi-arm block copolymers to linear block copolymer is at least 1.85:1, or even at least 3:1. In some embodiments, the ratio of multi-arm block copolymers to linear block copolymers is no greater than 5.7:1, or even no greater than 4:1.

The pressure sensitive adhesive layer in a particular embodiment further includes one or more tackifiers and optionally one or more plasticizers. Generally, a tackifier will be selected to be compatible with a rubbery block of a block copolymer as may be used for obtaining the cross-linked rubber. As used herein, a tackifier is "compatible" with a block if it is miscible with that block. Generally, the miscibility of a tackifier with a block can be determined by measuring the effect of the tackifier on the Tg of that block. If a tackifier is miscible with a block it will alter (e.g., increase) the Tg of that block.

A tackifier is "primarily compatible" with a block if it is at least miscible with that block, although it may also be miscible with other blocks. For example, a tackifier that is primarily compatible with a rubbery block will be miscible with the rubbery block, but may also be miscible with a glassy block.

Generally, resins having relatively low solubility parameters tend to associate with the rubbery blocks; however, their solubility in the glassy blocks tends to increase as the molecular weights or softening points of these resins are lowered. Exemplary tackifiers that are primarily compatible with the rubbery blocks include polymeric terpenes, hetero-functional terpenes, coumarone-indene resins, esters of rosin acids, disproportionated rosin acid esters, hydrogenated rosin acids, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and blends thereof.

In particular embodiments, a first high Tg tackifier having a glass transition temperature (Tg) of at least 60 degrees Celsius (° C). As used herein, the terms "high glass transition temperature tackifier" and "high Tg tackifier" refers to a tackifier having a glass transition temperature of at least 60 °C. In some embodiments, the first high Tg tackifier has a Tg of at least 65 °C, or even at least 70°C. In some embodiments, the first high Tg tackifier has a softening point of at least about 115 °C, and, in some embodiments, at least about 120 °C.

In some embodiments, the block copolymer adhesive compositions include a second high Tg tackifier that is primarily compatible with the glassy block(s) of the multi-arm block copolymer and, optionally, with the glassy block(s) of the linear block copolymer. Generally, a tackifier that is primarily compatible with a glassy block is miscible with the glassy block and may be miscible with a rubbery block.

Generally, resins having relatively high solubility parameters tend to associate with the glassy blocks; however, their solubility in the rubbery blocks tends to increase as the molecular weights or softening points of these resins are lowered. Exemplary tackifiers that are primarily compatible with the glassy blocks include coumarone-indene resins, rosin acids, esters of rosin acids, disproportionated rosin acid esters, C9 aromatics, alpha-methyl styrene, C9/C5 aromatic-modified aliphatic hydrocarbons, and blends thereof.

In some embodiments, the pressure sensitive adhesive layer further comprises at least one component selected from the group consisting of a low Tg tackifier, a plasticizer, and combinations thereof. As used herein, the term "low glass transition temperature tackifier" refers to a tackifier having a glass transition temperature of less than 60 °C.

Exemplary low Tg tackifiers include polybutenes.

Generally, a plasticizer is compatible with one or more blocks of the linear block copolymer, and/or one or more blocks of the multi-arm block copolymer. Generally, a plasticizer that is compatible with a block will be miscible with that block and will lower the Tg of that block. Exemplary plasticizers include naphthenic oils, liquid polybutene resins, polyisobutylene resins, and liquid isoprene polymers.

In some embodiments, the ratio of the total amount of high glass transition temperature tackifiers to block copolymers ranges from 0.8:1 to 1.25:1. In some embodiments, the ratio of the total amount of high Tg tackifiers to block copolymers is at least 0.85:1, or even at least 0.9:1. In some embodiments, the ratio of the total amount of high Tg tackifiers to block copolymers is no greater than 1.15:1, or even no greater that 1.1 to 1.

In some embodiments, the ratio of the rubbery block compatible high Tg tackifier to the glassy block compatible high Tg tackifier is ranges from 1:1 to 9:1. In some embodiments, the ratio of the rubbery block compatible high Tg tackifier to the glassy block compatible high Tg tackifier is at least 1.25:1, or even at least 1.5:1. In some embodiments the ratio of the rubbery block compatible high Tg tackifier to the glassy block compatible high Tg tackifier is no greater than 4:1, or even no greater than 3:1.

In a particularly preferred embodiment, the pressure sensitive adhesive layer also includes an acrylic pressure sensitive adhesive component. Typically, the pressure sensitive adhesive layer comprises at least about 0.1 parts, in some embodiments, at least about 0.5 parts, at least about 1 part, or even at least about 2 parts of an acrylic pressure sensitive adhesive component.

In a particular embodiment, the pressure sensitive adhesive layer comprise no greater than about 10 parts, in some embodiments, no greater than about 8 parts, no greater than about 5 parts, or even no greater than about 4 parts of the acrylic pressure sensitive adhesive component. The amount of cross-linked block copolymer will typically be between 30 and 60 or between 30 and 50 parts by weight of the total weight of the pressure sensitive adhesive layer.

In another embodiment, the acrylic pressure sensitive adhesive component may be comprised in the pressure sensitive adhesive layer in an amount of between 40 and 60 parts by weight. In this embodiment, the amount of cross-linked block copolymer will typically be between 10 and 20 parts by weight of the weight of the pressure sensitive adhesive layer.

Typically, the acrylic pressure sensitive adhesive component of the pressure sensitive adhesive layer is an acrylic polymer derived from one or more acrylic esters of a non-tertiary alkyl alcohol that contains 3 to 14 carbon atoms. Exemplary acrylic acid esters include isooctyl acrylate, 2-ethylhexyl acrylate, butyl acrylate, isobornyl acrylate, and combinations thereof. Exemplary methacrylic acid esters include the methacrylate analogues of these acrylic acid esters. Typically, the acrylic polymer will further comprise one or more units derived from a polar monomer such as for example described above.

In some embodiments, the acrylic polymer comprises at least about 70 parts, in some embodiments, at least about 80 parts, at least about 90 parts, at least about 95 parts, or even about 100 parts of at least one acrylic or methacrylic ester of a non-tertiary alkyl alcohol.

In some embodiments, acrylic polymer comprises no greater than about 30 parts, in some embodiments, no greater than about 20 parts, no greater than about 10 parts, no greater than about 5 parts, and even no greater than 1 part of at least one copolymerized polar monomer. In some embodiments, the acrylic adhesive composition does not include a copolymerized polar monomer.

In some embodiments, the ratio of the combination of the block copolymers and high Tg tackifiers to the acrylic pressure sensitive adhesive component is at least 8.3:1. In some embodiments, the ratio of the combination of the block copolymers and high Tg tackifiers to the acrylic pressure sensitive adhesive component is at least 12.5:1, at least 22:1, at least 90:1, or even at least 180:1.

In some embodiments, the ratio of the combination of the block copolymers, high Tg tackifiers, and acrylic pressure sensitive adhesive component to the liquid plasticizer ranges from 32:1 to 10:1. In some embodiments, the ratio of the combination of the block copolymers, high Tg tackifiers, and acrylic pressure sensitive adhesive component to the liquid plasticizer is no greater than 25:1, or even no greater than 20:1. In some embodiments, the ratio of the combination of the block copolymers, high Tg tackifiers, and acrylic pressure sensitive adhesive component to the liquid plasticizer is at least 12.5:1.

The preparation of the tapes used according to the invention is well known and described, e.g., in US 2011/0281964 A1 and in US 2012/0029105.

An adhesive tape that is, according to the invention, provided as a level wound roll, has on one major side of a central foamed layer a layer of a polymer composition which in particular is of low tack or non-tacky at room temperature, said polymer composition being activated and becoming tacky when heat energy is supplied, these are called heat-activatable adhesives (HAA). With heat-activatable adhesive layer is meant an adhesive that requires heating in order to develop its maximum bond strength in bonding to a substrate. A heat-activatable adhesive may or may not have useful pressure sensitive adhesive properties at room temperature (about 25°C). Typically, a heat-activatable adhesive for use with the present invention will be based on a thermoplastic polymer such as for example a film of a copolymer of ethylene and propylene, thermoplastic polyurethane which may be tackified or not.

Heat-activatable adhesives develop the adhesive properties necessary for the end application to a sufficient extent only on the supply of thermal energy. Heat-activatable adhesives which can be used include thermoplastic, heat-activatable adhesives, hotmelt adhesives; usually solvent-free adhesives which only under hot conditions develop sufficient fluidity to develop sufficient (self-)adhesive forces-and/or reactive, heat-activatable adhesives-on supply of heat, a chemical reaction takes place, the adhesive sets chemically and so produces the adhesive effect. The tapes are preferably provided on one side with a heat-activatable adhesive layer and the foam layer itself may be of self-adhesive design or carry a separate layer of pressure sensitive adhesive, or both, and has self-adhesive properties.

According to the invention, the roll of acrylic foam tape, comprises an acrylic foam tape comprising an acrylic foam with opposite first and second major sides, the first major side comprising a pressure sensitive adhesive protected by a first liner and the second major side comprising a heat activatable adhesive, and the acrylic foam tape is level-wound in essentially helical convolutions around a core, with a second liner arranged on the heat activatable adhesive, the second liner extending over at least one edge of the second major surface.

An acrylic foam tape on a roll according to the invention can have a width of about 4 mm to about 50mm, preferably about 5 mm to about 20mm.

The term "liner", as used according throughout the present text relates to a cover layer of material with non-adhesive first and second major sides. A liner is generally used for covering an adhesive surface on a major side of an adhesive tape for protection of the adhesive from dirt and undesired adhesion to surfaces and is designed to be removed before the adhesive surface of the adhesive tape covered by the liner is used. A liner is often made of a material with surface properties that allow the layer to adhere to the surface to be covered with a predetermined adhesion, which is often chosen such that the liner shows at least a small amount of adhesion to the surface to prevent it from becoming disattached from the surface to be covered. The adhesion should, however, not be so strong that the removal results in a destruction of the adhesive tape, the adhesive surface or the liner itself.

An adhesive tape used in a roll of acrylic foam tape according to the invention is covered by a first liner on a first major side comprising a pressure sensitive adhesive, and a second liner arranged on the heat activatable adhesive.

As a liner material, any common known liner material for covering PSA and can any common known liner material for covering HAA be used. The liner material can be a flexible material or comparatively rigid material. It can be totally or partially opaque or transparent, coloured or pigmented. The liner can be made of a material that has the desired adhesion to the surface it covers as an inherent material property. It is also possible that the liner is made of a material which has to be surface-coated with a coating conferring the desired adhesion properties to the liner.

It has proven to be successful if the material for the second liner (protecting the HAA side of the adhesive tape on the tape roll) is made from a polyolefin such as polyethylene or polypropylene or copolymers thereof or a polyester such as polyethylene terephthalate or a compatible mixture of two or more of these polymers or polymer types.

In a further embodiment of the invention, it has proven to be advantageous if the liner is made of a stiff material, so that it can function as a guiding layer for the tape upon unwinding and further use, e.g., in a laminating process, preventing the potentially adhesive edges of the tape from contacting surfaces of spooling and deflection rollers or pulleys, disturbing the laminating process and soiling the spools, rollers and the like.

In a particular embodiment the liner has an elongation at break of at least 200%, for example at least 250% or at least 310%. In another embodiment the liner will have a 100% E-modules of not more than 350 N/mm², for example not more than 300 N/mm².

The second liner extends over at least one edge of the second major surface.

This can be achieved by choosing a second liner that has a width that is larger than the width of the acrylic foam. As generally the width of the acrylic foam corresponds to the overall width of the adhesive tape (not including the second liner), the width of the second liner can be larger than the width of the adhesive tape. It has proven to be advantageous, if the second liner is more than 5%, especially 10% or more, or 20% or more, or 30% or more, wider than the tape. The spatial arrangement of tape and second liner can be such that the tape is arranged symmetrical with regard to the liner, i.e. outer zones of the liner extending beyond the edges of the tape have essentially equal dimensions, i.e., are essentially equally wide. The arrangement of tape and second liner can, however, also be such that one of the edges of the second liner extending beyond the edges of the tape is wider than the other edge, or that only one of the edges of the second liner extends over an edge of the tape.

The second liner forms one or more overlap zones. An "overlap zone" is a zone where the second liner of a convolution of an adhesive tape being level wound on a core, the second liner covering a second major surface of the tape, can be overlapped by a succeeding convolution, whereby the second liner of the preceding convolution contacts the first major surface of the tape of the succeeding convolution in an overlap zone. The overlap zone can be chosen such that the overlap is substantial, i.e., the overlap zone having a width of 5% or more of the width of the tape, e.g., 10% or more or 15% or more or 20% or more. It is, however, also possible that the overlap zone has a width which is less than 5% of the width of the tape, e.g., 4% or less, 3% or less or 2% or less.

A result of the overlap zones is that each convolution is mechanically secured by the succeeding convolution, thus increasing the mechanical stability of the level wound roll without having to use a high winding force, which would unnecessarily strain the tape.

According to a further embodiment of the invention, the elastic modulus of the second liner is equal to or preferably higher, than the resultant elastic modulus of the layers of the foam tape. In this case, subjecting the tape including the liner to strain, e.g., by pulling on the tape to unwind it from the roll, the liner will allow for a more uniform strain, as its elastic modulus is preferably higher than the elastic modulus of the tape. It is thus as well possible to exert a pulling force only on the liner, or at least a majority of the pulling force, in order to use the second liner as a "conveyor belt" for the acrylic foam tape, avoiding strain problems with the acrylic foam tape while unwinding and transporting the unwound tape to its place of use in, e.g., a laminating machine.

A roll of acrylic tape can have a drop-test displacement of 0.5 to 50 mm. A drop-test is generally a test developed in order to reliably and easily determine, whether a tape roll has sufficient stability for handling and acceptable unwind characteristics. The drop test is essentially a method for measuring the stability of a roll of tape, preferably a level-wound roll of acrylic foam tape, wherein a tape roll wound in convolutions on a core having a length measured along a longitudinal axis of the core which is longer than the width of the tape roll, thus extending from the center of the roll, is subjected to a force peak, preferably dropped from a specified height onto a solid platform such that it contacts the platform with the part of the core extending from the center of the roll, and the displacement of a convolution of the tape roll in the direction of the force, preferably the drop direction, is measured.

The drop-test according to the invention is a test which allows in a simple but effective way to determine whether a roll of tape, especially a level-wound roll of tape, is wound with a force that results in acceptable handling characteristics of the roll. Level wound tape rolls tend to disintegrate when handled without the necessary care. Disintegration usually is caused by one or more convolutions falling off the roll due to slackness of the convolutions caused by a lack of tension. As a result it was often tried to increase the winding force in order to increase the tension of the tape and reduce slackness. This, in turn, however can result in deformations of the tape due to high stress, leading to permanent and irreversible elongation of parts of the tape. High winding forces can also result in deformation of the tape across its cross-section. This can happen especially with foam tapes, where high winding forces along with long storage times of a roll can result in permanently flattened tape areas, leading to malfunction of the tape in a laminating process or to decreased stability of a laminated end product.

The drop-test, being a method according to the invention, alleviates these problems. With the drop test, a roll wound on a central elliptical, or preferably a cylindrical core, is subjected to a force pulse exerting a force on the levels of the roll in a direction which is essentially determined by the direction of the central axis of the cylindrical or elliptical core, and measuring the displacement of a convolution of the roll. The method according to the invention (drop-test) can also be performed successfully if the direction of the force is not in total alignment with the direction of the central axis, but the directions divert with an angle of about 20° or less, preferably less than about 10° or less than about 5°. The force can generally be exerted in any direction with regard to the gravitational direction, but is preferably exerted in essential alignment with regard to the gravitational direction, diverting by an angle of less than about 30°, preferably less than about 20°.

The force pulse can be achieved by any method able to exert a sudden comparatively high force on the roll. The force can be applied by moving the roll or by impacting the roll with a moving object. While the impulse of the object is an important factor in the determination of a sufficient force peak, it should be noted that for practicability it has proven successful if the impacting object has at least half the mass of the roll. It has further proven to be most practicable, if the moving object has essentially the mass of the roll, and preferably is the roll itself.

Thus, in a preferred embodiment the force peak is exerted to the roll by dropping the roll from a specified height onto a solid object, e.g., a platform or the ground, such that it contacts the object with the part of the core extending from the centre of the roll, and measuring the displacement of a convolution of the tape roll in the drop direction.

For measurement of the displacement of a convolution a measurement point on a convolution is determined, and its displacement relative to a point of reference, e.g., a point of reference outside of the roll/core system or a point of reference on the core, such as, e.g., the end of a core cylinder, is measured. The measurement point can be marked for easier determination, e.g., by putting a visible mark on the convolution, but the displacement can also be measured electronically, e.g., by video analysis and the like.

It has proven to facilitate the drop-test when the drop of the roll is guided by having a cylinder movably inserted in the hollow core, the cylinder having an outer diameter slightly smaller than the inner diameter of the hollow core so that the cylinder can easily and reversibly slide in the hollow core along the longitudinal axis of the hollow core, the cylinder being mounted essentially perpendicular with regard to its central axis in the core direction on a base plate, where the roll is dropped along the longitudinal axis of the cylinder from a predetermined height. It has proven to be advantageous if the cylinder mounted on the base plate has markers for determining the drop distance, so the test can be repeated reliably.

The result of the drop test allows for a determination of the mechanical properties of a roll of tape. The drop test can be applied to any kind of tape roll. In the present case, the drop test is used to determine the stability of a level wound tape roll of acrylic tape, as described above. To this effect, the roll of tape is set on a cylinder mounted on a base plate, the cylinder bearing markings to determine the fall distance and the cylinder being inserted into the hollow core of the level wound tape roll. The roll is then lowered to the base plate such than the cylinder is completely inserted into the hollow core. A measurement point is then marked on the roll. The measurement point can be marked on any convolution of a complete outer level of convolutions of the roll, However, it can be preferred if the measurement point is located on a convolution in the beginning of the upper third of the roll. The distance between the measurement point and the surface of the base plate is then determined as a first measurement and stored for comparison.

The roll is then lifted to the predetermined height and dropped. The core cylinder of the roll drops on the base plate and the levels of the roll are dislocated from the impact. The distance of the measurement point from the base-plate is determined as a second measurement, and the difference between the first measurement and the second measurement is calculated and its value is noted as the displacement value.

It has proven to be practical if the rolls according to the invention have a displacement value of 0,2 to 6 mm if the foam tape has a length of less than 400m, 0,5 to 8 mm if the foam tape has a length of 400m to 700m, 1 to 9 mm if the foam tape has a length of more than 700m to 1000m or 2 to 10 mm if the foam tape has a length of more than 1000m. It has further proven to be helpful, if the dropping heights for the rolls are varied according to the tape length for the above mentioned acrylic foam tapes. So generally, the drop-test should be performed with a dropping height of 100 mm, if the tape is less than 1000 m in length. If the tape is more than 1000 m in length, the dropping height should be 50mm.

The measurement is preferably performed on rolls that have been stored after winding for a period of at least 4 h, preferably for a period of at least 8 h. The drop-test is not necessarily sensitive to storage conditions of the roll, but it has proven to be advantageous if the roll has been stored under defined condition, preferably at standard climate (23°C and 50% relative humidity).

In a preferred embodiment, the invention relates to a level-wound roll of acrylic foam tape, comprising an acrylic foam tape comprising an acrylic foam with opposite first and second major sides, the first major side comprising a pressure sensitive adhesive protected by a first liner and the second major side comprising a heat activatable adhesive, the acrylic foam tape being level-wound in essentially helical convolutions around a core with a second liner arranged on the heat activatable adhesive, the second liner having a width that is larger than the width of the acrylic foam, wherein the acrylic foam is thermally crosslinked and the roll has a drop-test displacement of 2 to 6 mm if the foam tape has a length of less than 400m, 0,5 to 8 mm if the foam tape has a length of 400m to 700m, 1 to 9 mm if the foam tape has a length of more than 700m to 1000m or 2 to 10 mm if the foam tape has a length of more than 1000m, the drop test being performed with a dropping height of 100mm for rolls with a tape length of less than 1000 m and 50 mm for rolls with a tape length of 1000m or more, the tape having a width of 5 to 15 mm and an overall thickness (including first and second liners) of 0,5 to 4 mm.

A level wound tape according to the invention also can comprise and preferably comprises a first liner on the side of the tape carrying a PSA. Generally, all liners known in the art to be used as liners on PSA surfaces can be used according to the invention, e.g., made from polyolefines such as polyethylene or polypropylene or copolymers comprising polyethylene or polypropylene or both, or made from polyesters such as polyethylene terephthalate or the like, or made from paper, especially made from paper which has been covered with a layer of material reducing the stickiness of the paper surface with regard to the PSA layer to be covered, e.g., a siliconized paper.

In a preferred embodiment of the invention, the core of the roll is a cylinder with a length of 20 to 180 cm and a diameter of 5 to 30 cm. It can be preferred from a technical point of view, if the cylindrical core has a diameter of about 10 to about 25 cm, especially about 13 to about 20 cm.

The tape is level-wound around the cylindrical core such that at least a first and a second substantially cylindrical level of convolutions, with reversing points at the end of each level, are formed. A "level" is defined as the cylindrical space created by a layer of tape. A level-wound roll according to the invention thus has at least two levels being defined by concentric cylinders. As the process of level winding at the end of each level requires the tape to progress from a preceding to a succeeding level, the convolution comprising the level progress does not strictly belong to only one level, but is at one point dissected by the outer an inner surface of the hypothetical cylinders defining successive levels.

In a roll according to the invention, the second level is thus surrounding the first level such that a first major side of the second level is in contact with a second major side of the first level or a second major side of the second level is in contact with a first major side of the first level. It has proven successful in terms of stability and handling of the roll, if the length of the first level measured along the central axis of the cylindrical core is 80 to 95% of the length of the core. The first level can be in symmetric arrangement with regard to the length of the core. It can, however, also be favourable, if the first level is not in symmetric arrangement. Thus, the first level can also begin at or close to one end of the core and end after 80 to 95% of the length of the core.

A roll according to the invention generally has at least two levels of tape. It is often, however, favourable from economic considerations, if a roll has three or more substantially cylindrical levels of convolutions, as the length of tape stored on a roll increases. A roll of acrylic foam tape according to the invention can thus have a multitude of levels, e.g.5 levels or more or 10 levels or more or 20 levels of more or 40 levels or more.

In such cases it can be preferred, if the length of each successive level, measured along the central axis of the cylindrical core and defined by the distance of the outermost edge of a first and a last convolution of such a level, is less than the length of its preceding level. As a result, the tape roll has a cylindrical main body and ends towards the ends of the core which are formed like truncated cones. The cone angle of the ends of the tape roll is between 60° and 180°, preferably from 120° to 170° or from 150° to 180°.

Generally, a roll according to the invention has a cylindrical main body. It can, however, be preferred, if the roll has at least a first and a second diameter, the first diameter being defined as the diameter of a cylinder comprising the outer surface of the first convolution of an outermost full layer or the last convolution of an outermost full layer, or both, and the second diameter being defined as the diameter of a cylinder comprising the outer surface of a convolution being essentially equidistant from the first convolution of the first layer and the last convolution of the first layer. In this case, the main body has a hyperboloidal shape or a shape approaching a hyperboloid. In a preferred embodiment of the invention, the second diameter is 0,1 to 35% less than the first diameter, e.g., 1 to 30% or 5 to 25 %.

In order to level-wind the roll, the tape with opposite first and second major sides can be wound around a cylindrical or elliptical core, by feeding the tape to the core with a feed tension of between 0.5 and 20 N and a feed direction with a directional speed along the central axis of the core such that it is wound around the core in helical convolutions with a helical angle of less than 20°, preferably less than 10° or less than ...5........ °, thus forming a first layer of tape around the core, and reversing the feed direction at least once at a reversing point so that at least a second layer of helical convolutions of tape is formed on the first layer

The feed tension can vary with each level, or it can vary with each convolution or both, e.g., in order to create hyperbolical shapes of the roll or to allow for mechanical restrictions caused by an increase in pressure exerted on lower levels of tape on the roll.

In a further embodiment of the invention the tape is fed to the core such that the distance between adjacent tape edges of each convolution is less than 35 %, especially less than 15% of the width of the tape. It can be preferred if the distance between the edges is 10% or less or 5% or less or 2% or less as compared to the width of the tape. The distance between the edges can be varied by adjusting the directional speed of the feeding process. In some cases it has proven to be advantageous if the distance between the edges is kept as small as possible. In cases where succeeding convolutions overlap with the second liner of the tape roll, however, it can be preferred to leave a distance between the edges such that the pressure exerted on the second liner by the overlap does not damage the tape upon storage.

It can be preferred, if the second liner is fed to the core separately from the tape. In this case it is possible to separately adjust the feed tension. Especially when using the method for foam tapes, it can be advantageous if the feed tension of the second liner is greater than the feed tension of the foam tape. The feed tension can also be varied during feeding of the tape and the liner. The variation of the feed tension can be in line with a variation of the feed tension of the tape. It is, however, also possible to vary the feed tension of the liner independent from the feed tension of the tape. It is, e.g., possible to vary the feed tension of the second liner within a layer, e.g., increase the feed tension of the second liner towards the centre of the layer and decrease it towards its edges. It is also possible that the feed tension of the second liner is varied for each successive layer, e.g., increased for a succeeding layer or decreased. It is also possible to vary the feed tension of the second liner within a layer and in successive layers.

A further aspect of the description relates to a layered acrylic foam tape comprising a layer of thermally crosslinked acrylic foam with opposite first and second major sides, the first major side comprising a layer of pressure sensitive adhesive protected by a first liner and the second major side comprising a layer of heat activatable adhesive with a second liner arranged on the heat activatable adhesive, the second liner extending over at least one edge of the second major surface, e.g., by having a width that is larger than the width of the acrylic foam, as described above.

A further aspect of the invention relates to a method of making a roll of adhesive tape, wherein an adhesive tape with opposite first and second major sides, at least one major side comprising a pressure sensitive adhesive protected by a first liner and the second major side also comprising an adhesive, is wound around a cylindrical or elliptical core by feeding the tape to the core with a feed tension of between 0.5 and 20N, preferably less than 10° or less than 5°, and a feed direction with a directional speed along the central axis of the core such that it is wound around the core in helical convolutions with a helical angle of less than 20°, preferably less than 10° or less than 5°, thus forming a first layer of tape around the core and reversing the feed direction at least once at a reversing point so that at least a second layer of helical convolutions of tape is formed on the first layer.

The term "feed direction" relates to the direction of movement of the tape feed relative to the longitudinal axis of the core. The "feed direction" is determined by the direction (along the longitudinal axis of the core) in which the succession of convolutions proceeds in a layer. The succession of convolutions in a layer is determined starting from the beginning of the tape feed, i.e., from the starting point of the first layer. The feed direction reverses for each layer as compared to the preceding layer. The feeding of the tape to the core can be achieved by a movement of the tape relative to the core along the longitudinal axis of the core either by keeping the core fixed and shifting the contact point of the tape with the core or a preceding underlying layer, relative to the longitudinal axis of the core, or by keeping the tape feed fixed and shifting the core relative to the longitudinal axis of the core, or both measures.

The method according to the invention can be used with virtually all kinds of double sided adhesive tapes. The adhesive tapes to be used in a method according to the invention have double sided adhesive properties, can be single layered or multi layered. The adhesive properties can be cue to the presence of a pressure sensitive adhesive or a heat activatable adhesive or both, preferably due to the presence of a PSA on at least one major surface of the tape. The tape can be made from any kind of polymer and it can be in the form of a non-foamed or a foamed layer.

The method according to the invention can be used to provide rolls with more than two layers of adhesive tape. For providing rolls with three or more layers, the feed direction is reversed three times or more. In order to avoid damaging the tape upon applying several layers of convolutions, thereby increasing the pressure on the lower levels of convolutions, the method according to the invention can be applied such that the first level is fed with a first tension and each successive level is fed with a successive tension and each successive tension is lower than the preceding tension. The decrease in tension between successive layers of the roll can be between 0.001 and 1 N, e.g. between 0.01 and 0.8 N.

It is also encompassed by the invention that the directional speed with which the tape is fed to the core is varied, thereby varying the distance between convolutions and thus creating voids. If the directional speed increases in the direction towards a point equidistant from the reversing point and decreases towards a reversing point, an increase in distance between convolutions (thereby increasing the distance between the tape edges of each convolution) can result in a different packing of the convolutions of each level over the length of the level, thereby creating a hyperboloid shape of the roll. Such a shape can aid in stability of the roll during handling.

The method according to the invention also encompasses the option that each succeeding reversing point is closer to a point equidistant from the preceding two reversing points than its predecessor. Thus, a conical end zone of the tape roll is created, also allowing for a better handling behaviour of a roll thus manufactured.

Another aspect of the invention relates to the fact that the tape has at least one liner arranged on an adhesive side of the tape, said liner extending over at least one edge of the adhesive side (extending liner). As already explained above, it is thus possible to create an overlap zone allowing for an increased mechanical stability of a tape roll thus manufactured. Having the liner extend over the edge of the adhesive side can, e.g., be attained by the liner having a width that is larger than the width of the adhesive tape. In the specific case of a tape having a PSA side and a HAA side it can be advantageous if the liner extending over the edge of the adhesive side is placed on the HAA side. The method according to the invention is a preferable method for obtaining level wound rolls of acrylic foam tape as described above, and all aspects of the manufacture and material of the tape rolls mentioned above can also apply to the claimed method.

It can be preferred, if the extending liner is fed to the core separately from the tape. In this case it is possible to separately adjust the feed tension, as explained above. Especially when using the method for foam tapes, it can be advantageous if the feed tension of the second liner is greater than the feed tension of the foam tape.

The invention further relates to a method of making an elongate rubber seal for attachment to a door or a door frame, comprising:
a. Providing a level wound roll of acrylic foam tape as defined above or made according to a method as defined above;
b. Providing a roll of an elongate rubber material;
c. Providing a lamination apparatus comprising means for unwinding said roll of acrylic foam tape, means for unwinding said roll of elongate rubber material, means for heat laminating said acrylic foam tape to said rubber material and means for guiding said roll of acrylic foam tape and said elongate rubber material to the heat laminating means;
d. Unwinding said roll of acrylic foam tape;
e. Removing the liner on the heat activatable adhesive layer of the tape;
f. Conveying a resulting acrylic foam tape with the surface of the heat activatable adhesive layer exposed to the heat laminating means;
g. Unwinding the roll of elongate rubber material and conveying the elongate rubber material to the heat laminating means;
h. Heat laminating the elongate rubber material and acrylic foam tape to form an elongate rubber seal;
i. Winding the elongate rubber seal.

It can be especially preferred, if the tension exerted to the second liner after removal is higher than the tension exerted to the resulting acrylic foam tape.

In order to bond the rubber article to the HAA layer, the optional support layer on the second major surface of the HAA layer is removed. Lamination may be performed according to methods known in the art using conventional heat-bond lamination equipment, such as a Heat-Bond-Laminator Model TE 2417 available from EHVO GmbH, Germany. Typically, a sufficient amount of heat is first applied in order to activate the HAA layer. For instance, the HAA layer may be preheated using an atmosphere of air having a temperature of up to about 650°C. The preactivated tape is laminated to the desired rubber article using an appropriate amount of pressure. The pressure-sensitive adhesive layer may serve to finally attach the resulting composite article, e.g., an elongate rubber seal, to a variety of surfaces, for instance to a metal surface of a car, e.g., to a door frame of the body of a vehicle.

## Claims

1. Roll of acrylic foam tape, comprising an acrylic foam tape comprising an acrylic foam with opposite first and second major sides, the first major side comprising a pressure sensitive adhesive protected by a first liner and the second major side comprising a heat activatable adhesive, the acrylic foam tape being level-wound in essentially helical convolutions around a core with a second liner arranged on the heat activatable adhesive, the second liner extending over at least one edge of the second major surface, wherein the acrylic foam is thermally crosslinked.

2. Roll according to claim 1, **characterized in that** the roll has a drop-test displacement of 0.5 to 50 mm.

3. Roll according to any of the preceding claims, **characterized in that** the foam tape has a length of 200m to 1500m.

4. Roll according to any of the preceding claims wherein the core is a cylinder with a length of 20 to 180 cm and a diameter of 5 to 30 cm and the tape is level-wound around the cylindrical core such that at least a first and a second substantially cylindrical level of convolutions, with reversing points at the end of each level, are formed, the second level surrounding the first level such that a first major side of the second level is in contact with a second major side of the first level or a second major side of the second level is in contact with a first major side of the first level, and the length of the first level measured along the central axis of the cylindrical core is 80 to 95% of the length of the core.

5. Roll according to claim 4, **characterized in that** it has three or more substantially cylindrical levels of convolutions and the length of each successive level, measured along the central axis of the cylindrical core and defined by the distance of the outermost edge of a first and a last convolution of such a level, is less than the length of its preceding level.

6. Roll according to any of the preceding claims, **characterized in that** the convolutions have a helical angle and the helical angle is less than 20°, especially less than 10°.

7. Roll according to one of the preceding claims, **characterized in that** the foam comprises homopolymers, copolymers, mixtures of homopolymers or mixtures of copolymers or mixtures of one or more homopolymers and one or more copolymers selected from the group consisting of polyacrylates, polymethacrylates, polyacrylate/polymethacrylate copolymers.

8. Method of making a roll of adhesive tape, wherein an adhesive tape comprising an acrylic foam with opposite first and second major sides, at least one major side comprising a pressure sensitive adhesive protected by a first liner and the second major side also comprising an adhesive, is wound around a cylindrical or elliptical core by feeding the tape to the core with a feed tension of between 0.5 and 5 N and a feed direction with a directional speed along the central axis of the core such that it is wound around the core in helical convolutions with a helical angle of less than 20°, preferably less than 10° or less than 5°, thus forming a first layer of tape around the core and reversing the feed direction at least once at a reversing point so that at least a second layer of helical convolutions of tape is formed on the first layer.

9. Method according to claim 8, **characterized in that** the first level is fed with a first tension and each successive level is fed with a successive tension and each successive tension is lower than the preceding tension.

10. Method according to any of claims 8 or 9, **characterized in that** the tape has a second liner arranged on a heat activatable adhesive on the second major side, the second liner extending over at least one edge of the tape.

11. Method of making an elongate rubber seal for attachment to a door or a door frame, comprising:
a. providing a level wound roll of acrylic foam tape as defined in any of claims 1 to 7 or made according to a method of any of claims 8 to 10;
b. providing a roll of an elongate rubber material;
c. providing a lamination apparatus comprising means for unwinding said roll of acrylic foam tape, means for unwinding said roll of elongate rubber material, means for heat laminating said acrylic foam tape to said rubber material and means for guiding said roll of acrylic foam tape and said elongate rubber material to the heat laminating means;
d. unwinding said roll of acrylic foam tape;
e. removing said second liner;
f. conveying a resulting acrylic foam tape with the surface of the heat activatable adhesive layer exposed to the heat laminating means;
g. unwinding the roll of elongate rubber material and conveying the elongate rubber material to the heat laminating means;
h. heat laminating the elongate rubber material and acrylic foam tape to form an elongate rubber seal;
i. winding the elongate rubber seal.

12. Method according to Claim 11, wherein the tension exerted to the second liner after removal is higher than the tension exerted to the resulting acrylic foam tape.

## Patentansprüche

1. Rolle von Acrylschaumband, umfassend ein Acrylschaumband, umfassend einen Acrylschaum mit gegenüberliegenden ersten und zweiten Hauptseiten, wobei die erste Hauptseite einen Haftkleber umfasst, der durch einen ersten Schutzfilm geschützt ist, und wobei die zweite Hauptseite einen wärmeaktivierbaren Kleber umfasst, wobei das Acrylschaumband im Wesentlichen spiralförmig gleichmäßig um einen Kern, der einen zweiten Schutzfilm aufweist, der auf dem wärmeaktivierbaren Kleber angeordnet ist, gespult ist, wobei sich der zweite Schutzfilm über mindestens eine Kante der zweiten Hauptoberfläche erstreckt, wobei der Acrylschaum thermisch vernetzt ist.

2. Rolle nach Anspruch 1, **dadurch gekennzeichnet, dass** die Rolle eine Falltest-Versetzung von 0,5 bis 50 mm aufweist.

3. Rolle nach einem der vorstehenden Ansprüche, **dadurch gekennzeichnet, dass** das Schaumband eine Länge von 200 m bis 1500 m aufweist.

4. Rolle nach einem der vorstehenden Ansprüche, wobei der Kern ein Zylinder mit einer Länge von 20 bis 180 cm und einem Durchmesser von 5 bis 30 cm ist und das Band gleichmäßig um den zylindrischen Kern gespult ist, sodass mindestens ein erstes und ein zweites im Wesentlichen zylindrisches Niveau von Windungen mit Umkehrpunkten am Ende jedes Niveaus gebildet wird, wobei das zweite Niveau das erste Niveau derart umgibt, dass eine erste Hauptseite des zweiten Niveaus in Kontakt mit einer zweiten Hauptseite des ersten Niveaus steht oder eine zweite Hauptseite des zweiten Niveaus in Kontakt mit einer ersten Hauptseite des ersten Niveaus steht und die Länge des ersten Niveaus, die entlang der Mittelachse des zylindrischen Kerns gemessen wird, 80 bis 95 % der Länge des Kerns beträgt.

5. Rolle nach Anspruch 4, **dadurch gekennzeichnet, dass** diese drei oder mehr im Wesentlichen zylindrische Niveaus von Windungen aufweist und die Länge jedes aufeinanderfolgenden Niveaus, gemessen entlang der Mittelachse des zylindrischen Kerns und definiert durch den Abstand der äußersten Kante einer ersten und einer letzten Windung eines solchen Niveaus, kleiner als die Länge ihres vorhergehenden Niveaus ist.

6. Rolle nach einem der vorstehenden Ansprüche, **dadurch gekennzeichnet, dass** die Faltungen einen Helixwinkel aufweisen und der Helixwinkel weniger als 20°, insbesondere weniger als 10° beträgt.

7. Rolle nach einem der vorstehenden Ansprüche, **dadurch gekennzeichnet, dass** der Schaum Homopolymere, Copolymere, Mischungen von Homopolymeren oder Mischungen von Copolymeren oder Mischungen von einem oder mehreren Homopolymeren und einem oder mehreren Copolymeren, ausgewählt aus der Gruppe, bestehend aus Polyacrylaten, Polymethacrylaten, Polyacrylat-/Polymethacrylat-Copolymeren, umfasst.

8. Verfahren zum Herstellen einer Klebebandrolle, wobei ein Klebeband einen Acrylschaum mit gegenüberliegenden ersten und zweiten Hauptseiten umfasst, wobei mindestens eine Hauptseite einen Haftkleber umfasst, der durch einen ersten Schutzfilm geschützt ist, und die zweite Hauptseite, die ebenfalls einen Kleber umfasst, um einen zylindrischen oder elliptischen Kern gewickelt wird, indem das Band mit einer Zuführspannung zwischen 0,5 und 5 N und einer Zuführrichtung mit einer Richtungsgeschwindigkeit entlang der zentralen Achse des Kerns dem Kern zugeführt wird, sodass es spiralförmig Windungen mit einem Helixwinkel von weniger als 20°, vorzugsweise weniger als 10° oder weniger als 5°, um den Kern gewickelt wird, wodurch eine erste Bandschicht um den Kern herum gebildet wird, und die Zuführrichtung mindestens einmal an einem Umkehrpunkt umgekehrt wird, sodass mindestens eine zweite Schicht spiralförmiger Bandwicklungen auf der ersten Schicht gebildet wird.

9. Verfahren nach Anspruch 8, **dadurch gekennzeichnet, dass** das erste Niveau mit einer ersten Spannung zugeführt wird und jedes nachfolgende Niveau mit einer nachfolgenden Spannung zugeführt wird und jede nachfolgende Spannung niedriger als die vorhergehende Spannung ist.

10. Verfahren nach einem der Ansprüche 8 oder 9, **dadurch gekennzeichnet, dass** das Band einen zweiten Schutzfilm aufweist, der auf einem wärmeaktivierbaren Klebstoff auf der zweiten Hauptseite angeordnet ist, wobei sich der zweite Schutzfilm über mindestens eine Kante des Bandes erstreckt.

11. Verfahren zur Herstellung einer länglichen Gummidichtung zur Befestigung an einer Tür oder einem Türrahmen, umfassend:
a. Bereitstellen einer gleichmäßig gespulten Rolle von Acrylschaumband nach einem der Ansprüche 1 bis 7 oder hergestellt nach einem Verfahren der Ansprüche 8 bis 10;
b. Bereitstellen einer Rolle eines länglichen Gummimaterials;
c. Bereitstellen einer Laminiervorrichtung, die Mittel zum Abwickeln der Rolle von Acrylschaumband, Mittel zum Abwickeln der Rolle von länglichem Gummimaterial, Mittel zum Heißlaminieren des Acrylschaumbandes auf das Gummimaterial und Mittel zum Führen der Rolle von Acrylschaumband und des länglichen Gummimaterials an das Heißlaminiermittel umfasst;
d. Abwickeln der Rolle von Acrylschaumband;
e. Entfernen des zweiten Schutzfilms;
f. Fördern eines sich ergebenden Acrylschaumbandes, wobei die Oberfläche der wärmeaktivierbaren Klebeschicht dem Heißlaminiermittel ausgesetzt wird;
g. Abwickeln der Rolle von länglichem Gummimaterial und Fördern des länglichen Gummimaterials zu dem Heißlaminiermittel;
h. Heißlaminieren des länglichen Gummimaterials und des Acrylschaumbandes, um eine längliche Gummidichtung zu bilden;
i. Wickeln der länglichen Gummidichtung.

12. Verfahren nach Anspruch 11, wobei die auf den zweiten Schutzfilm nach dem Entfernen ausgeübte Spannung höher ist als die auf das sich ergebende Acrylschaumband ausgeübte Spannung.

## Revendications

1. Rouleau de ruban de mousse acrylique, comprenant un ruban de mousse acrylique comprenant une mousse acrylique avec un premier côté principal et un deuxième côté principal opposés, le premier côté principal comprenant un adhésif sensible à la pression protégé par un premier revêtement et le deuxième côté principal comprenant un adhésif thermocollant, le ruban de mousse acrylique étant trancanné suivant des circonvolutions essentiellement hélicoïdales autour d'un mandrin avec un deuxième revêtement disposé sur l'adhésif thermocollant, le deuxième revêtement s'étendant par-dessus au moins un bord de la deuxième surface principale, dans lequel la mousse acrylique est réticulée thermiquement.

2. Rouleau selon la revendication 1, **caractérisé en ce que** le rouleau présente un déplacement de 0,5 à 50 mm lors d'un essai de chute.

3. Rouleau selon l'une quelconque des revendications précédentes, **caractérisé en ce que** le rouleau de mousse a une longueur de 200 m à 1500 m.

4. Rouleau selon l'une quelconque des revendications précédentes dans lequel le mandrin est un cylindre avec une longueur de 20 à 180 cm et un diamètre de 5 à 30 cm et le ruban est trancanné autour du mandrin cylindrique de telle sorte qu'au moins un premier et un deuxième niveau sensiblement cylindriques de circonvolutions, avec des points d'inversion à l'extrémité de chaque niveau, sont formés, le deuxième niveau entourant le premier niveau de sorte qu'un premier côté principal du deuxième niveau se trouve en contact avec un deuxième côté principal du premier niveau ou qu'un deuxième côté principal du deuxième niveau se trouve en contact avec un premier côté principal du premier niveau, et la longueur du premier niveau mesurée le long de l'axe central du mandrin cylindrique représente de 80 à 95 % de la longueur du mandrin.

5. Rouleau selon la revendication 4, **caractérisé en ce qu'il** comporte trois niveaux de circonvolutions essentiellement cylindriques ou plus et **en ce que** la longueur de chaque niveau successif, mesurée le long de l'axe central du mandrin cylindrique et définie par la distance du bord le plus extérieur d'une première et d'une dernière circonvolution dudit niveau, est inférieure à la longueur de son niveau précédent.

6. Rouleau selon l'une quelconque des revendications précédentes, **caractérisé en ce que** les circonvolutions présentent un angle d'hélice et que l'angle d'hélice est inférieur à 20°, en particulier inférieur à 10°.

7. Rouleau selon l'une quelconque des revendications précédentes, **caractérisé en ce que** la mousse comprend des homopolymères, des copolymères, des mélanges d'homopolymères ou des mélanges de copolymères ou des mélanges d'un ou plusieurs homopolymères et d'un ou plusieurs copolymères choisis dans le groupe constitué de polyacrylates, polyméthacrylates, copolymères polyacrylate-polyméthacrylate.

8. Procédé de fabrication d'un rouleau de ruban adhésif, dans lequel un ruban adhésif comprenant une mousse acrylique avec un premier côté principal et un deuxième côté principal opposés, au moins un premier côté principal comprenant un adhésif sensible à la pression protégé par un premier revêtement et le deuxième côté principal comprenant également un adhésif, est enroulé autour d'un mandrin cylindrique ou elliptique en alimentant le ruban au mandrin avec une tension d'alimentation entre 0,5 et 5 N et un sens d'alimentation avec une vitesse directionnelle le long de l'axe central du mandrin, de sorte qu'il est enroulé autour du mandrin suivant des circonvolutions hélicoïdales avec un angle d'hélice inférieur à 20°, de préférence inférieur à 10° ou inférieur à 5°, ce qui permet de former une première couche de ruban autour du mandrin et en inversant le sens d'alimentation au moins une fois au niveau d'un point d'inversion de sorte qu'au moins une deuxième couche de circonvolutions hélicoïdales de ruban est formée sur la première couche.

9. Procédé selon la revendication 8, **caractérisé en ce que** le premier niveau est alimenté avec une première tension et chaque niveau successif est alimenté avec une tension successive et chaque tension successive est inférieure à la tension précédente.

10. Procédé selon l'une quelconque des revendications 8 ou 9, **caractérisé en ce que** le ruban a un deuxième revêtement agencé sur un adhésif thermocollant sur le deuxième côté principal, le deuxième revêtement s'étendant par-dessus au moins un bord du ruban.

11. Procédé de fabrication d'un joint de caoutchouc allongé destiné à être fixé sur une porte ou un cadre de porte,
comprenant :
a. la fourniture d'un rouleau de mousse acrylique trancanné tel que défini dans l'une quelconque des revendications 1 à 7 ou fabriqué suivant un procédé selon l'une quelconque des revendications 8 à 10 ;
b. la fourniture d'un rouleau de matériau de caoutchouc allongé ;
c. la fourniture d'un appareil de stratification comprenant un moyen pour dérouler ledit rouleau de mousse acrylique, un moyen pour dérouler ledit rouleau de matériau de caoutchouc allongé, un moyen pour stratifier thermiquement ledit ruban de mousse acrylique sur ledit matériau caoutchouc et un moyen pour guider ledit rouleau de ruban de mousse acrylique et ledit matériau de caoutchouc allongé jusqu'au moyen de stratification thermique ;
d. le déroulage dudit rouleau de ruban de mousse acrylique ;
e. le retrait dudit deuxième revêtement ;
f. le transport d'un ruban de mousse acrylique résultant avec la surface de la couche d'adhésif thermocollant exposée jusqu'au moyen de stratification thermique ;
g. le déroulage du rouleau de matériau de caoutchouc allongé et le transport du matériau de caoutchouc allongé jusqu'au moyen de stratification thermique ;
h. la stratification thermique du matériau de caoutchouc allongé et du ruban de mousse acrylique pour former un joint en caoutchouc allongé ;
i. l'enroulement du joint de caoutchouc allongé.

12. Procédé selon la revendication 11, dans lequel la tension exercée sur le deuxième endos après retrait est supérieure à la tension exercée sur le ruban de mousse acrylique résultant.
